(19) **Europäisches Patentamt / European Patent Office / Office européen des brevets**

(11) **EP 4 597 858 A1**

(12) **EUROPEAN PATENT APPLICATION**
published in accordance with Art. 153(4) EPC

(43) Date of publication:
06.08.2025 Bulletin 2025/32

(21) Application number: 23873177.2

(22) Date of filing: 27.09.2023

(51) International Patent Classification (IPC):
H04B 7/0456 (2017.01)     H04B 7/0404 (2017.01)
H04B 7/06 (2006.01)     H04W 72/23 (2023.01)
H04W 72/04 (2023.01)     H04W 72/12 (2023.01)

(52) Cooperative Patent Classification (CPC):
H04B 7/0404; H04B 7/0456; H04B 7/06;
H04W 72/04; H04W 72/12; H04W 72/23

(86) International application number:
PCT/KR2023/014956

(87) International publication number:
WO 2024/072066 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.09.2022 KR 20220124717

(71) Applicant: LG Electronics Inc.
Yeongdeungpo-gu
Seoul 07336 (KR)

(72) Inventors:
• PARK, Haewook
  Seoul 06772 (KR)
• KANG, Jiwon
  Seoul 06772 (KR)
• GO, Seongwon
  Seoul 06772 (KR)

(74) Representative: Maikowski & Ninnemann
Patentanwälte Partnerschaft mbB
Postfach 15 09 20
10671 Berlin (DE)

(54) **METHOD AND APPARATUS FOR TRANSMITTING AND RECEIVING SIGNAL IN WIRELESS COMMUNICATION SYSTEM**

(57) According to at least one of embodiments disclosed in the present specification, a method by which a terminal transmits a signal in a wireless communication system comprises: receiving a medium access control (MAC) control element (CE) related to transmission based on at least eight uplink antenna ports; receiving, over a physical downlink control channel (PDCCH), DCI for uplink scheduling, including a transmission precoding matrix index (TPMI) field; and transmitting an uplink signal on the basis of the DCI, wherein, on the basis that the DCI is for the transmission based on the at least eight uplink antenna ports, a set of precoding matrixes is determined by means of the MAC CE, and, from the set of the precoding matrixes determined through the MAC CE, a precoding matrix for the uplink signal may be determined on the basis of an index value of the TPMI field.

**FIG. 11**

```
┌─────────────────────────────┐
│ Receive MAC CE related      │──B05
│ (at least) 8-TX transmission│
└─────────────────────────────┘
              │
              ▼
┌─────────────────────────────┐
│ Receive UL scheduling DCI   │──B10
└─────────────────────────────┘
              │
              ▼
┌─────────────────────────────┐
│ Transmit UL signal          │──B15
└─────────────────────────────┘
```

EP 4 597 858 A1

**Description**

## TECHNICAL FIELD

The present disclosure relates to a wireless communication system, and more particularly, to a method and apparatus for transmitting or receiving a downlink/uplink radio signal in a wireless communication system.

## BACKGROUND

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may be any of a code division multiple access (CDMA) system, a frequency division multiple access (FDMA) system, a time division multiple access (TDMA) system, an orthogonal frequency division multiple access (OFDMA) system, and a single carrier frequency division multiple access (SC-FDMA) system.

## DISCLOSURE

## TECHNICAL PROBLEM

An object of the present disclosure is to provide a method of efficiently performing wireless signal transmission/reception procedures and an apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

## TECHNICAL SOLUTION

According to an aspect, a method of transmitting a signal by a user equipment (UE) in a wireless communication system may include receiving a medium access control (MAC) control element (CE) related to an at least eight uplink antenna ports-based transmission, receiving downlink control information (DCI) for uplink scheduling, including a transmission precoding matrix index (TPMI) field through a physical downlink control channel (PDCCH), and transmitting an uplink signal based on the DCI. Based on that the DCI is for the at least eight uplink antenna ports-based transmission, a precoding matrix set may be determined through the MAC CE, and a precoding matrix for the uplink signal may be determined from the precoding matrix set determined through the MAC CE, based on an index value in the TPMI field.

The MAC CE may include a transmission rank indicator (TRI) field. The precoding matrix set may be determined based on a TRI.

The precoding matrix set may be a codebook, and one of a plurality of codebooks configured for the UE may be determined by the MAC CE.

The precoding matrix set determined through the MAC CE may be a subset of precoding matrices included in one codebook. A plurality of subsets of the precoding matrices included in the one codebook may be configured for the UE through higher layer signaling. One of the plurality of subsets may be determined through the MAC CE.

The MAC CE may include information about a codebook subsampling pattern for determining the precoding matrix set.

The precoding matrix set determined through the MAC CE may be used after a predetermined time offset from a hybrid automatic repeat request-acknowledgement (HARQ-ACK) for the MAC CE. A default precoding matrix set may be used from the reception of the MAC CE until before application of the precoding matrix set.

According to another aspect, a processor-readable recording medium recoding a program for performing the above-described method of transmitting a signal may be provided.

According to another aspect, a UE for performing the above-described method of transmitting a signal may be provided.

According to another aspect, a processing device for controlling a UE performing the above-described method of transmitting a signal may be provided.

According to another aspect, a method of receiving a signal by a base station (BS) in a wireless communication system may include transmitting a MAC CE related to an at least eight uplink antenna ports-based reception, transmitting DCI including a TPMI field through a PDCCH, and receiving an uplink signal based on the DCI. Based on that the DCI is for the at least eight uplink antenna ports-based reception, a precoding matrix set may be determined through the MAC CE, and a precoding matrix for the uplink signal may be determined from the precoding matrix set determined through the MAC CE, based on an index value in the TPMI field.

According to another aspect, a processor-readable recording medium recoding a program for performing the above-described method of receiving a signal may be provided.

According to another aspect, a BS for performing the above-described method of receiving a signal may be provided.

**ADVANTAGEOUS EFFECTS**

According to the present disclosure, wireless signal transmission and reception may be efficiently performed in a wireless communication system.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

**BRIEF DESCRIPTION OF THE DRAWINGS**

FIG. 1 illustrates physical channels used in a 3rd generation partnership project (3GPP) system as an exemplary wireless communication system, and a general signal transmission method using the same.

FIG. 2 illustrates a radio frame structure.

FIG. 3 illustrates a resource grid of a slot.

FIG. 4 illustrates exemplary mapping of physical channels in a slot.

FIG. 5 illustrates an exemplary PDSCH and acknowledgment/negative acknowledgment (ACK/NACK) transmission process.

FIG. 6 illustrates an exemplary PUSCH transmission process.

FIG. 7 illustrates an example of a channel state information (CSI) related procedure.

FIG. 8 illustrates multi-transmission and reception point (TRP) transmission.

FIG. 9 illustrates an exemplary 8-Tx UL transmission.

FIG. 10 illustrates an exemplary UL transmission from a UE to multiple TRPs.

FIG. 11 illustrates an implementation example of a method of operating a UE in a wireless communication system according to an embodiment of the present disclosure.

FIG. 12 illustrates an implementation example of a method of operating a BS in a wireless communication system according to an embodiment of the present disclosure.

FIGS. 13 to 16 are diagrams illustrating an example of a communication system 1 and wireless devices applicable to the present disclosure.

FIG. 17 is a diagram illustrating an example of a discontinuous reception (DRX) operation applicable to the present disclosure.

**DETAILED DESCRIPTION**

Embodiments of the present disclosure are applicable to a variety of wireless access technologies such as code division multiple access (CDMA), frequency division multiple access (FDMA), time division multiple access (TDMA), orthogonal frequency division multiple access (OFDMA), and single carrier frequency division multiple access (SC-FDMA). CDMA can be implemented as a radio technology such as Universal Terrestrial Radio Access (UTRA) or CDMA2000. TDMA can be implemented as a radio technology such as Global System for Mobile communications (GSM)/General Packet Radio Service (GPRS)/Enhanced Data Rates for GSM Evolution (EDGE). OFDMA can be implemented as a radio technology such as Institute of Electrical and Electronics Engineers (IEEE) 802.11 (Wireless Fidelity (Wi-Fi)), IEEE 802.16 (Worldwide interoperability for Microwave Access (WiMAX)), IEEE 802.20, and Evolved UTRA (E-UTRA). UTRA is a part of Universal Mobile Telecommunications System (UMTS). 3rd Generation Partnership Project (3GPP) Long Term Evolution (LTE) is part of Evolved UMTS (E-UMTS) using E-UTRA, and LTE-Advanced (A) is an evolved version of 3GPP LTE. 3GPP NR (New Radio or New Radio Access Technology) is an evolved version of 3GPP LTE/LTE-A.

As more and more communication devices require a larger communication capacity, there is a need for mobile broadband communication enhanced over conventional radio access technology (RAT). In addition, massive Machine Type Communications (MTC) capable of providing a variety of services anywhere and anytime by connecting multiple devices and objects is another important issue to be considered for next generation communications. Communication system design considering services/UEs sensitive to reliability and latency is also under discussion. As such, introduction of new radio access technology considering enhanced mobile broadband communication (eMBB), massive MTC, and Ultra-Reliable and Low Latency Communication (URLLC) is being discussed. In the present disclosure, for simplicity, this technology will be referred to as NR (New Radio or New RAT).

For the sake of clarity, 3GPP NR is mainly described, but the technical idea of the present disclosure is not limited thereto.

In the present disclosure, the term "set/setting" may be replaced with "configure/configuration", and both may be used interchangeably. Further, a conditional expression (e.g., "if", "in a case", or "when") may be replaced by "based on that" or "in a state/status". In addition, an operation or software/hardware (SW/HW) configuration of a user equipment (UE)/base station (BS) may be derived/understood based on satisfaction of a corresponding condition. When a process on a receiving (or transmitting) side may be derived/understood from a process on the transmitting (or receiving) side in signal transmission/reception between wireless communication devices (e.g., a BS and a UE), its description may be omitted. Signal determination/generation/encoding/transmission of the transmitting side, for example, may be understood as signal monitoring reception/decoding/determination of the receiving side. Further, when it is said that a UE performs (or does not perform) a specific operation, this may also be interpreted as that a BS expects/assumes (or does not expect/assume) that the UE performs the specific operation. When it is said that a BS performs (or does not perform) a specific operation, this may also be interpreted as that a UE expects/assumes (or does not expect/assume) that the BS performs the specific operation. In the following description, sections, embodiments, examples, options, methods, schemes, and so on are distinguished from each other and indexed, for convenience of description, which does not mean that each of them necessarily constitutes an independent invention or that each of them should be implemented only individually. Unless explicitly contradicting each other, it may be derived/understood that at least some of the sections, embodiments, examples, options, methods, schemes, and so on may be implemented in combination or may be omitted.

In a wireless communication system, a user equipment (UE) receives information through downlink (DL) from a base station (BS) and transmit information to the BS through uplink (UL). The information transmitted and received by the BS and the UE includes data and various control information and includes various physical channels according to type/usage of the information transmitted and received by the UE and the BS.

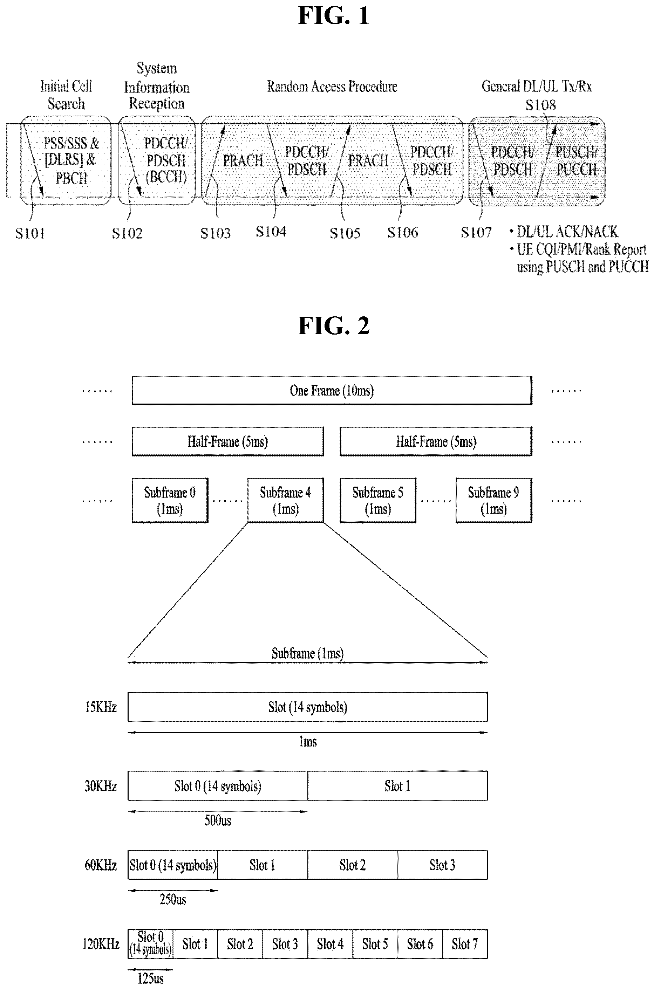

FIG. 1 illustrates physical channels used in a 3GPP NR system and a general signal transmission method using the same.

When a UE is powered on again from a power-off state or enters a new cell, the UE performs an initial cell search procedure, such as establishment of synchronization with a BS, in step S101. To this end, the UE receives a synchronization signal block (SSB) from the BS. The SSB includes a primary synchronization signal (PSS), a secondary synchronization signal (SSS), and a physical broadcast channel (PBCH). The UE establishes synchronization with the BS based on the PSS/SSS and acquires information such as a cell identity (ID). The UE may acquire broadcast information in a cell based on the PBCH. The UE may receive a DL reference signal (RS) in an initial cell search procedure to monitor a DL channel status.

After initial cell search, the UE may acquire more specific system information by receiving a physical downlink control channel (PDCCH) and receiving a physical downlink shared channel (PDSCH) based on information of the PDCCH in step S102.

The UE may perform a random access procedure to access the BS in steps S103 to S106. For random access, the UE may transmit a preamble to the BS on a physical random access channel (PRACH) (S103) and receive a response message for preamble on a PDCCH and a PDSCH corresponding to the PDCCH (S 104). In the case of contention-based random access, the UE may perform a contention resolution procedure by further transmitting the PRACH (S105) and receiving a PDCCH and a PDSCH corresponding to the PDCCH (S106).

After the foregoing procedure, the UE may receive a PDCCH/PDSCH (S107) and transmit a physical uplink shared channel (PUSCH)/physical uplink control channel (PUCCH) (S108), as a general downlink/uplink signal transmission procedure. Control information transmitted from the UE to the BS is referred to as uplink control information (UCI). The UCI includes hybrid automatic repeat and request acknowledgement/negative-acknowledgement (HARQ-ACK/NACK), scheduling request (SR), channel state information (CSI), etc. The CSI includes a channel quality indicator (CQI), a precoding matrix indicator (PMI), a rank indicator (RI), etc. While the UCI is transmitted on a PUCCH in general, the UCI may be transmitted on a PUSCH when control information and traffic data need to be simultaneously transmitted. In addition, the UCI may be aperiodically transmitted through a PUSCH according to request/command of a network.

FIG. 2 illustrates a radio frame structure. In NR, uplink and downlink transmissions are configured with frames. Each radio frame has a length of 10 ms and is divided into two 5-ms half-frames (HF). Each half-frame is divided into five 1-ms subframes (SFs). A subframe is divided into one or more slots, and the number of slots in a subframe depends on subcarrier spacing (SCS). Each slot includes 12 or 14 Orthogonal Frequency Division Multiplexing (OFDM) symbols according to a cyclic prefix (CP). When a normal CP is used, each slot includes 14 OFDM symbols. When an extended CP is used, each slot includes 12 OFDM symbols.

Table 1 exemplarily shows that the number of symbols per slot, the number of slots per frame, and the number of slots per subframe vary according to the SCS when the normal CP is used.

[Table 1]

| SCS (15*2$^u$) | N$^{slot}_{symb}$ | N$^{frame,u}_{slot}$ | N$^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |
| N$^{slot}_{symb}$: Number of symbols in a slot<br>N$^{frame,u}_{slot}$: Number of slots in a frame<br>N$^{subframe,u}_{slot}$: Number of slots in a subframe | | | |

Table 2 illustrates that the number of symbols per slot, the number of slots per frame, and the number of slots per subframe vary according to the SCS when the extended CP is used.

[Table 2]

| SCS (15*2$^u$) | N$^{slot}_{symb}$ | N$^{frame,u}_{slot}$ | N$^{subframe,u}_{slot}$ |
|---|---|---|---|
| 60KHz (u=2) | 12 | 40 | 4 |

The structure of the frame is merely an example. The number of subframes, the number of slots, and the number of symbols in a frame may vary.

In the NR system, OFDM numerology (e.g., SCS) may be configured differently for a plurality of cells aggregated for one UE. Accordingly, the (absolute time) duration of a time resource (e.g., an SF, a slot or a TTI) (for simplicity, referred to as a time unit (TU)) consisting of the same number of symbols may be configured differently among the aggregated cells. Here, the symbols may include an OFDM symbol (or a CP-OFDM symbol) and an SC-FDMA symbol (or a discrete Fourier transform-spread-OFDM (DFT-s-OFDM) symbol).

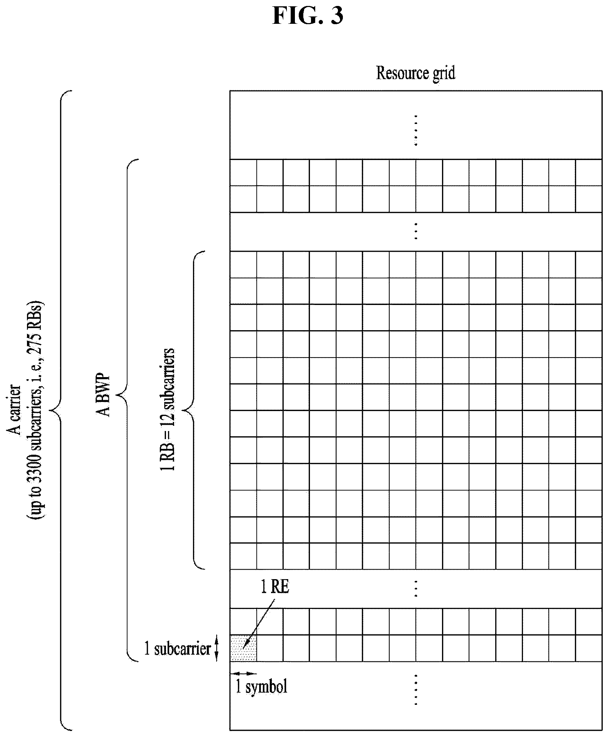

FIG. 3 illustrates a resource grid of a slot. A slot includes a plurality of symbols in the time domain. For example, when the normal CP is used, the slot includes 14 symbols. However, when the extended CP is used, the slot includes 12 symbols. A carrier includes a plurality of subcarriers in the frequency domain. A resource block (RB) is defined as a plurality of consecutive subcarriers (e.g., 12 consecutive subcarriers) in the frequency domain. A bandwidth part (BWP) may be defined to be a plurality of consecutive physical RBs (PRBs) in the frequency domain and correspond to a single numerology (e.g., SCS, CP length, etc.). The carrier may include up to N (e.g., 5) BWPs. Data communication may be performed through an activated BWP, and only one BWP may be activated for one UE. In the resource grid, each element is referred to as a resource element (RE), and one complex symbol may be mapped to each RE.

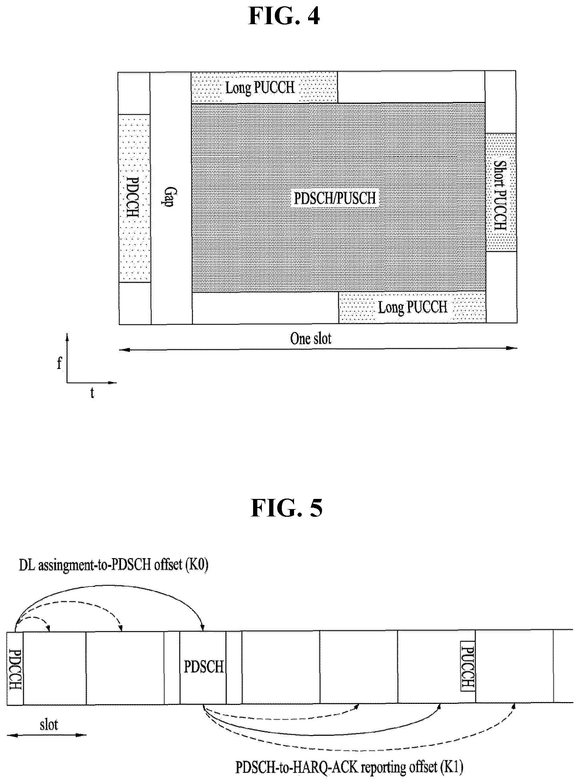

FIG. 4 illustrates exemplary mapping of physical channels in a slot. A PDCCH may be transmitted in a DL control region, and a PDSCH may be transmitted in a DL data region. A PUCCH may be transmitted in a UL control region, and a PUSCH may be transmitted in a UL data region. A guard period (GP) provides a time gap for transmission mode-to-reception mode switching or reception mode-to-transmission mode switching at a BS and a UE. Some symbol at the time of DL-to-UL switching in a subframe may be configured as a GP.

Each physical channel will be described below in greater detail.

The PDCCH delivers DCI. For example, the PDCCH (i.e., DCI) may carry information about a transport format and resource allocation of a DL shared channel (DL-SCH), resource allocation information of an uplink shared channel (UL-SCH), paging information on a paging channel (PCH), system information on the DL-SCH, information on resource allocation of a higher-layer control message such as an RAR transmitted on a PDSCH, a transmit power control command, information about activation/release of configured scheduling, and so on. The DCI includes a cyclic redundancy check (CRC). The CRC is masked with various identifiers (IDs) (e.g., a radio network temporary identifier (RNTI)) according to an owner or usage of the PDCCH. For example, if the PDCCH is for a specific UE, the CRC is masked by a UE ID (e.g., cell-RNTI (C-RNTI)). If the PDCCH is for a paging message, the CRC is masked by a paging-RNTI (P-RNTI). If the PDCCH is for system information (e.g., a system information block (SIB)), the CRC is masked by a system information RNTI (SI-RNTI). When the PDCCH is for an RAR, the CRC is masked by a random access-RNTI (RA-RNTI).

The PDCCH includes 1, 2, 4, 8, or 16 control channel elements (CCEs) according to its aggregation level (AL). A CCE is a logical allocation unit used to provide a PDCCH with a specific code rate according to a radio channel state. A CCE includes 6 resource element groups (REGs), each REG being defined by one OFDM symbol by one (P)RB. The PDCCH is transmitted in a control resource set (CORESET). A CORESET is defined as a set of REGs with a given numerology (e.g., an SCS, a CP length, and so on). A plurality of CORESETs for one UE may overlap with each other in the time/frequency domain. A CORESET may be configured by system information (e.g., a master information block (MIB)) or UE-specific higher-layer signaling (e.g., radio resource control (RRC) signaling). Specifically, the number of RBs and the number of symbols (3 at maximum) in the CORESET may be configured through higher-layer signaling.

For PDCCH reception/detection, the UE monitors PDCCH candidates. A PDCCH candidate is CCE(s) that the UE should monitor to detect a PDCCH. Each PDCCH candidate is defined as 1, 2, 4, 8, or 16 CCEs according to an AL. The monitoring includes (blind) decoding PDCCH candidates. A set of PDCCH candidates decoded by the UE are defined as a PDCCH search space (SS). An SS may be a common search space (CSS) or a UE-specific search space (USS). The UE may obtain DCI by monitoring PDCCH candidates in one or more SSs configured by an MIB or higher-layer signaling. Each CORESET is associated with one or more SSs, and each SS is associated with one CORESET. An SS may be defined based on the following parameters.

controlResourceSetId: A CORESET related to an SS.
monitoringSlotPeriodicityAndOffset: A PDCCH monitoring periodicity (in slots) and a PDCCH monitoring offset (in slots).
monitoringSymbolsWithinSlot: PDCCH monitoring symbols in a slot (e.g., the first symbol(s) of a CORESET).
nrofCandidates: The number of PDCCH candidates (one of 0, 1, 2, 3, 4, 5, 6, and 8) for each AL={1, 2, 4, 8, 16}.

An occasion (e.g., time/frequency resources) in which the UE is to monitor PDCCH candidates is defined as a PDCCH (monitoring) occasion. One or more PDCCH (monitoring) occasions may be configured in a slot.

Table 3 shows the characteristics of each SS.

[Table 3]

| Type | Search Space | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB Decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI, or CS-RNTI(s) | |
| UE Specific | UE Specific | C-RNTI, or MCS-C-RNTI, or CS-RNTI(s) | User specific PDSCH decoding |

Table 4 shows DCI formats transmitted on the PDCCH.

[Table 4]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |

(continued)

| DCI format | Usage |
|---|---|
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or DL scheduling information. DCI format 2_0 is used to deliver dynamic slot format information (e.g., a dynamic slot format indicator (SFI)) to a UE, and DCI format 2_1 is used to deliver DL pre-emption information to a UE. DCI format 2_0 and/or DCI format 2_1 may be delivered to a corresponding group of UEs on a group common PDCCH which is a PDCCH directed to a group of UEs.

DCI format 0_0 and DCI format 1_0 may be referred to as fallback DCI formats, whereas DCI format 0_1 and DCI format 1_1 may be referred to as non-fallback DCI formats. In the fallback DCI formats, a DCI size/field configuration is maintained to be the same irrespective of a UE configuration. In contrast, the DCI size/field configuration varies depending on a UE configuration in the non-fallback DCI formats.

The PDSCH conveys DL data (e.g., DL-shared channel transport block (DL-SCH TB)) and uses a modulation scheme such as quadrature phase shift keying (QPSK), 16-ary quadrature amplitude modulation (16QAM), 64QAM, or 256QAM. A TB is encoded into a codeword. The PDSCH may deliver up to two codewords. Scrambling and modulation mapping may be performed on a codeword basis, and modulation symbols generated from each codeword may be mapped to one or more layers. Each layer together with a demodulation reference signal (DMRS) is mapped to resources, and an OFDM symbol signal is generated from the mapped layer with the DMRS and transmitted through a corresponding antenna port.

The PUCCH delivers uplink control information (UCI). The UCI includes the following information.

SR (Scheduling Request): Information used to request UL-SCH resources.

HARQ (Hybrid Automatic Repeat reQuest)-ACK (Acknowledgement): A response to a DL data packet (e.g., codeword) on the PDSCH. An HARQ-ACK indicates whether the DL data packet has been successfully received. In response to a single codeword, a 1-bit of HARQ-ACK may be transmitted. In response to two codewords, a 2-bit HARQ-ACK may be transmitted. The HARQ-ACK response includes positive ACK (simply, ACK), negative ACK (NACK), discontinuous transmission (DTX) or NACK/DTX. The term HARQ-ACK is interchangeably used with HARQ ACK/NACK and ACK/NACK.

CSI (Channel State Information): Feedback information for a DL channel. Multiple input multiple output (MIMO)-related feedback information includes an RI and a PMI.

Table 5 illustrates exemplary PUCCH formats. PUCCH formats may be divided into short PUCCHs (Formats 0 and 2) and long PUCCHs (Formats 1, 3, and 4) based on PUCCH transmission durations.

[Table 5]

| PUCCH format | Length in OFDM symbols $N_{\text{symb}}^{\text{PUCCH}}$ | Number of bits | Usage | Etc |
|---|---|---|---|---|
| 0 | 1 - 2 | $\leq 2$ | HARQ, SR | Sequence selection |
| 1 | 4 - 14 | $\leq 2$ | HARQ, [SR] | Sequence modulation |
| 2 | 1 - 2 | >2 | HARQ, CSI, [SR] | CP-OFDM |
| 3 | 4 - 14 | >2 | HARQ, CSI, [SR] | DFT-s-OFDM (no UE multiplexing) |
| 4 | 4 - 14 | >2 | HARQ, CSI, [SR] | DFT-s-OFDM (Pre DFT OCC) |

PUCCH format 0 conveys UCI of up to 2 bits and is mapped in a sequence-based manner, for transmission. Specifically, the UE transmits specific UCI to the BS by transmitting one of a plurality of sequences on a PUCCH of PUCCH format 0. Only when the UE transmits a positive SR, the UE transmits the PUCCH of PUCCH format 0 in PUCCH resources for a corresponding SR configuration.

PUCCH format 1 conveys UCI of up to 2 bits and modulation symbols of the UCI are spread with an orthogonal cover code (OCC) (which is configured differently whether frequency hopping is performed) in the time domain. The DMRS is transmitted in a symbol in which a modulation symbol is not transmitted (i.e., transmitted in time division multiplexing (TDM)).

PUCCH format 2 conveys UCI of more than 2 bits and modulation symbols of the DCI are transmitted in frequency division multiplexing (FDM) with the DMRS. The DMRS is located in symbols #1, #4, #7, and #10 of a given RB with a density of 1/3. A pseudo noise (PN) sequence is used for a DMRS sequence. For 2-symbol PUCCH format 2, frequency hopping may be activated.

PUCCH format 3 does not support UE multiplexing in the same PRBS, and conveys UCI of more than 2 bits. In other words, PUCCH resources of PUCCH format 3 do not include an OCC. Modulation symbols are transmitted in TDM with the DMRS.

PUCCH format 4 supports multiplexing of up to 4 UEs in the same PRBS, and conveys UCI of more than 2 bits. In other words, PUCCH resources of PUCCH format 3 include an OCC. Modulation symbols are transmitted in TDM with the DMRS.

At least one of one or two or more cells configured to the UE may be configured for PUCCH transmission. At least a primary cell may be set as a cell for the PUCCH transmission. At least one PUCCH cell group may be configured to the UE based on at least one cell where the PUCCH transmission is configured, and each PUCCH cell group includes one or two or more cells. A PUCCH cell group may be simply referred to as a PUCCH group. The PUCCH transmission may be configured not only in the primary cell but also in a secondary cell (Scell). The primary cell belongs to a primary PUCCH group, and the PUCCH-SCell where the PUCCH transmission is configured belongs to a secondary PUCCH group. For cells belonging to the primary PUCCH group, a PUCCH on the primary cell may be used. For cells belonging to the secondary PUCCH group, a PUCCH on the PUCCH-SCell may be used.

The PUSCH delivers UL data (e.g., UL-shared channel transport block (UL-SCH TB)) and/or UCI based on a CP-OFDM waveform or a DFT-s-OFDM waveform. When the PUSCH is transmitted in the DFT-s-OFDM waveform, the UE transmits the PUSCH by transform precoding. For example, when transform precoding is impossible (e.g., disabled), the UE may transmit the PUSCH in the CP-OFDM waveform, while when transform precoding is possible (e.g., enabled), the UE may transmit the PUSCH in the CP-OFDM or DFT-s-OFDM waveform. A PUSCH transmission may be dynamically scheduled by a UL grant in DCI, or semi-statically scheduled by higher-layer (e.g., RRC) signaling (and/or Layer 1 (L1) signaling such as a PDCCH) (configured scheduling or configured grant). The PUSCH transmission may be performed in a codebook-based or non-codebook-based manner. Table 6 is an excerpt from the UL precoding and the codebook therefor as defined in the NR standard document TS38.211.

[Table 6]

The block of vectors $\left[ y^{(0)}(i) \quad ... \quad y^{(\upsilon-1)}(i) \right]^{T}$, $i = 0,1,...,M_{\text{symb}}^{\text{layer}} - 1$ shall be precoded according to

$$\begin{bmatrix} z^{(p_0)}(i) \\ \vdots \\ z^{(p_{\rho-1})}(i) \end{bmatrix} = W \begin{bmatrix} y^{(0)}(i) \\ \vdots \\ y^{(\upsilon-1)}(i) \end{bmatrix}$$

where $i = 0,1,..., M_{symb}^{ap} - 1$, $M_{symb}^{ap} = M_{symb}^{layer}$. The set of antenna ports $\{p_0,...,p_{\rho-1}\}$ shall be determined according to the procedure in [6, TS 38.214].

For non-codebook-based transmission, the precoding matrix $W$ equals the identity matrix.

For codebook-based transmission, the precoding matrix $W$ is given by $W = 1$ for single-layer transmission on a single antenna port, otherwise by Tables 6.3.1.5-1 to 6.3.1.5-7 with the TPMI index obtained from the DCI scheduling the uplink transmission or the higher layer parameters according to the procedure in [6, TS 38.214].

When the higher-layer parameter *txConfig* is not configured, the precoding matrix $W = 1$.

**Table 6.3.1.5-1: Precoding matrix $W$ for single-layer transmission using two antenna ports.**

| TPMI index | $W$ (ordered from left to right in increasing order of TPMI index) | | | | | | | |
|---|---|---|---|---|---|---|---|---|
| $0 - 5$ | $\frac{1}{\sqrt{2}}\begin{bmatrix}1\\0\end{bmatrix}$ | $\frac{1}{\sqrt{2}}\begin{bmatrix}0\\1\end{bmatrix}$ | $\frac{1}{\sqrt{2}}\begin{bmatrix}1\\1\end{bmatrix}$ | $\frac{1}{\sqrt{2}}\begin{bmatrix}1\\-1\end{bmatrix}$ | $\frac{1}{\sqrt{2}}\begin{bmatrix}1\\j\end{bmatrix}$ | $\frac{1}{\sqrt{2}}\begin{bmatrix}1\\-j\end{bmatrix}$ | - | - |

**Table 6.3.1.5-2: Precoding matrix $W$ for single-layer transmission using four antenna ports with transform precoding enabled.**

| TPMI index | $W$ (ordered from left to right in increasing order of TPMI index) | | | | | | | |
|---|---|---|---|---|---|---|---|---|
| $0 - 7$ | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| $8 - 15$ | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\-1\end{bmatrix}$ | $\frac{1}{2}\begin{bmatrix}1\\1\\j\\j\end{bmatrix}$ | $\frac{1}{2}\begin{bmatrix}1\\1\\-1\\1\end{bmatrix}$ | $\frac{1}{2}\begin{bmatrix}1\\1\\-j\\-j\end{bmatrix}$ |
| $16 - 23$ | $\frac{1}{2}\begin{bmatrix}1\\j\\1\\j\end{bmatrix}$ | $\frac{1}{2}\begin{bmatrix}1\\j\\j\\1\end{bmatrix}$ | $\frac{1}{2}\begin{bmatrix}1\\j\\-1\\-j\end{bmatrix}$ | $\frac{1}{2}\begin{bmatrix}1\\j\\-j\\-1\end{bmatrix}$ | $\frac{1}{2}\begin{bmatrix}1\\-1\\1\\1\end{bmatrix}$ | $\frac{1}{2}\begin{bmatrix}1\\-1\\j\\-j\end{bmatrix}$ | $\frac{1}{2}\begin{bmatrix}1\\-1\\-1\\-1\end{bmatrix}$ | $\frac{1}{2}\begin{bmatrix}1\\-1\\-j\\j\end{bmatrix}$ |

| $24-27$ | $\frac{1}{2}\begin{bmatrix}1\\-j\\1\\-j\end{bmatrix}$ | $\frac{1}{2}\begin{bmatrix}1\\-j\\j\\-1\end{bmatrix}$ | $\frac{1}{2}\begin{bmatrix}1\\-j\\-1\\j\end{bmatrix}$ | $\frac{1}{2}\begin{bmatrix}1\\-j\\-j\\1\end{bmatrix}$ | - | - | - | - |
|---|---|---|---|---|---|---|---|---|

**Table 6.3.1.5-3: Precoding matrix $W$ for single-layer transmission using four antenna ports with transform precoding disabled.**

| TPMI index | $W$ (ordered from left to right in increasing order of TPMI index) | | | | | | | |
|---|---|---|---|---|---|---|---|---|
| $0-7$ | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| $8-15$ | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\1\end{bmatrix}$ | $\frac{1}{2}\begin{bmatrix}1\\1\\j\\j\end{bmatrix}$ | $\frac{1}{2}\begin{bmatrix}1\\1\\-1\\-1\end{bmatrix}$ | $\frac{1}{2}\begin{bmatrix}1\\1\\-j\\-j\end{bmatrix}$ |
| $16-23$ | $\frac{1}{2}\begin{bmatrix}1\\j\\1\\j\end{bmatrix}$ | $\frac{1}{2}\begin{bmatrix}1\\j\\j\\-1\end{bmatrix}$ | $\frac{1}{2}\begin{bmatrix}1\\j\\-1\\-j\end{bmatrix}$ | $\frac{1}{2}\begin{bmatrix}1\\j\\-j\\1\end{bmatrix}$ | $\frac{1}{2}\begin{bmatrix}1\\-1\\1\\-1\end{bmatrix}$ | $\frac{1}{2}\begin{bmatrix}1\\-1\\j\\-j\end{bmatrix}$ | $\frac{1}{2}\begin{bmatrix}1\\-1\\-1\\1\end{bmatrix}$ | $\frac{1}{2}\begin{bmatrix}1\\-1\\-j\\j\end{bmatrix}$ |
| $24-27$ | $\frac{1}{2}\begin{bmatrix}1\\-j\\1\\-j\end{bmatrix}$ | $\frac{1}{2}\begin{bmatrix}1\\-j\\j\\1\end{bmatrix}$ | $\frac{1}{2}\begin{bmatrix}1\\-j\\-1\\j\end{bmatrix}$ | $\frac{1}{2}\begin{bmatrix}1\\-j\\-j\\-1\end{bmatrix}$ | - | - | - | - |

**Table 6.3.1.5-4: Precoding matrix $W$ for two-layer transmission using two antenna ports with transform precoding disabled.**

| TPMI index | $W$ (ordered from left to right in increasing order of TPMI index) | | | |
|---|---|---|---|---|
| $0-2$ | $\frac{1}{\sqrt{2}}\begin{bmatrix}1 & 0\\0 & 1\end{bmatrix}$ | $\frac{1}{2}\begin{bmatrix}1 & 1\\1 & -1\end{bmatrix}$ | $\frac{1}{2}\begin{bmatrix}1 & 1\\j & -j\end{bmatrix}$ | |

**Table 6.3.1.5-5: Precoding matrix $W$ for two-layer transmission using four antenna ports with transform precoding disabled.**

| TPMI index | $W$ (ordered from left to right in increasing order of TPMI index) | | | |
|---|---|---|---|---|
| 0 – 3 | $\frac{1}{2}\begin{bmatrix}1&0\\0&1\\0&0\\0&0\end{bmatrix}$ | $\frac{1}{2}\begin{bmatrix}1&0\\0&0\\0&1\\0&0\end{bmatrix}$ | $\frac{1}{2}\begin{bmatrix}1&0\\0&0\\0&0\\0&1\end{bmatrix}$ | $\frac{1}{2}\begin{bmatrix}0&0\\1&0\\0&1\\0&0\end{bmatrix}$ |
| 4 – 7 | $\frac{1}{2}\begin{bmatrix}0&0\\1&0\\0&0\\0&1\end{bmatrix}$ | $\frac{1}{2}\begin{bmatrix}0&0\\0&0\\1&0\\0&1\end{bmatrix}$ | $\frac{1}{2}\begin{bmatrix}1&0\\0&1\\1&0\\0&-j\end{bmatrix}$ | $\frac{1}{2}\begin{bmatrix}1&0\\0&1\\1&0\\0&j\end{bmatrix}$ |
| 8 – 11 | $\frac{1}{2}\begin{bmatrix}1&0\\0&1\\-j&0\\0&1\end{bmatrix}$ | $\frac{1}{2}\begin{bmatrix}1&0\\0&1\\-j&0\\0&-1\end{bmatrix}$ | $\frac{1}{2}\begin{bmatrix}1&0\\0&1\\-1&0\\0&-j\end{bmatrix}$ | $\frac{1}{2}\begin{bmatrix}1&0\\0&1\\-1&0\\0&j\end{bmatrix}$ |
| 12 – 15 | $\frac{1}{2}\begin{bmatrix}1&0\\0&1\\j&0\\0&1\end{bmatrix}$ | $\frac{1}{2}\begin{bmatrix}1&0\\0&1\\j&0\\0&-1\end{bmatrix}$ | $\frac{1}{2\sqrt{2}}\begin{bmatrix}1&1\\1&1\\1&-1\\1&-1\end{bmatrix}$ | $\frac{1}{2\sqrt{2}}\begin{bmatrix}1&1\\1&1\\j&-j\\j&-j\end{bmatrix}$ |
| 16 – 19 | $\frac{1}{2\sqrt{2}}\begin{bmatrix}1&1\\j&j\\1&-1\\j&-j\end{bmatrix}$ | $\frac{1}{2\sqrt{2}}\begin{bmatrix}1&1\\j&j\\j&-j\\-1&1\end{bmatrix}$ | $\frac{1}{2\sqrt{2}}\begin{bmatrix}1&1\\-1&-1\\1&-1\\-1&1\end{bmatrix}$ | $\frac{1}{2\sqrt{2}}\begin{bmatrix}1&1\\-1&-1\\j&-j\\-j&j\end{bmatrix}$ |
| 20 – 21 | $\frac{1}{2\sqrt{2}}\begin{bmatrix}1&1\\-j&-j\\1&-1\\-j&j\end{bmatrix}$ | $\frac{1}{2\sqrt{2}}\begin{bmatrix}1&1\\-j&-j\\j&-j\\1&-1\end{bmatrix}$ | - | - |

**Table 6.3.1.5-6: Precoding matrix $W$ for three-layer transmission using four antenna ports with transform precoding disabled.**

| TPMI index | $W$ (ordered from left to right in increasing order of TPMI index) | | | |
|---|---|---|---|---|
| 0 – 3 | $\frac{1}{2}\begin{bmatrix}1&0&0\\0&1&0\\0&0&1\\0&0&0\end{bmatrix}$ | $\frac{1}{2}\begin{bmatrix}1&0&0\\0&1&0\\1&0&0\\0&0&1\end{bmatrix}$ | $\frac{1}{2}\begin{bmatrix}1&0&0\\0&1&0\\-1&0&0\\0&0&1\end{bmatrix}$ | $\frac{1}{2\sqrt{3}}\begin{bmatrix}1&1&1\\1&-1&1\\1&1&-1\\1&-1&-1\end{bmatrix}$ |

| 4 − 6 | $\frac{1}{2\sqrt{3}}\begin{bmatrix} 1 & 1 & 1 \\ 1 & -1 & 1 \\ j & j & -j \\ j & -j & -j \end{bmatrix}$ | $\frac{1}{2\sqrt{3}}\begin{bmatrix} 1 & 1 & 1 \\ -1 & 1 & -1 \\ 1 & 1 & -1 \\ -1 & 1 & 1 \end{bmatrix}$ | $\frac{1}{2\sqrt{3}}\begin{bmatrix} 1 & 1 & 1 \\ -1 & 1 & -1 \\ j & j & -j \\ -j & j & j \end{bmatrix}$ | - |

**Table 6.3.1.5-7: Precoding matrix $W$ for four-layer transmission using four antenna ports with transform precoding disabled.**

| TPMI index | $W$ (ordered from left to right in increasing order of TPMI index) | | | |
|---|---|---|---|---|
| 0 − 3 | $\frac{1}{2}\begin{bmatrix} 1 & 0 & 0 & 0 \\ 0 & 1 & 0 & 0 \\ 0 & 0 & 1 & 0 \\ 0 & 0 & 0 & 1 \end{bmatrix}$ | $\frac{1}{2\sqrt{2}}\begin{bmatrix} 1 & 1 & 0 & 0 \\ 0 & 0 & 1 & 1 \\ 1 & -1 & 0 & 0 \\ 0 & 0 & 1 & -1 \end{bmatrix}$ | $\frac{1}{2\sqrt{2}}\begin{bmatrix} 1 & 1 & 0 & 0 \\ 0 & 0 & 1 & 1 \\ j & -j & 0 & 0 \\ 0 & 0 & j & -j \end{bmatrix}$ | $\frac{1}{4}\begin{bmatrix} 1 & 1 & 1 & 1 \\ 1 & -1 & 1 & -1 \\ 1 & 1 & -1 & -1 \\ 1 & -1 & -1 & 1 \end{bmatrix}$ |
| 4 | $\frac{1}{4}\begin{bmatrix} 1 & 1 & 1 & 1 \\ 1 & -1 & 1 & -1 \\ j & j & -j & -j \\ j & -j & -j & j \end{bmatrix}$ | - | - | - |

FIG. 5 illustrates an exemplary ACK/NACK transmission process. Referring to FIG. 5, the UE may detect a PDCCH in slot #n. The PDCCH includes DL scheduling information (e.g., DCI format 1_0 or DCI format 1_1). The PDCCH indicates a DL assignment-to-PDSCH offset, K0 and a PDSCH-to-HARQ-ACK reporting offset, K1. For example, DCI format 1_0 and DCI format 1_1 may include the following information.

Frequency domain resource assignment: Indicates an RB set assigned to a PDSCH.

Time domain resource assignment: Indicates K0 and the starting position (e.g., OFDM symbol index) and length (e.g., the number of OFDM symbols) of the PDSCH in a slot

PDSCH-to-HARQ_feedback timing indicator: Indicates K1.

HARQ process number (4 bits): Indicates the HARQ process ID of data (e.g., a PDSCH or TB).

PUCCH resource indicator (PRI): Indicates a PUCCH resource to be used for UCI transmission among a plurality of PUCCH resources in a PUCCH resource set.

After receiving a PDSCH in slot #(n+K0) according to the scheduling information of slot #n, the UE may transmit UCI on a PUCCH in slot #(n+K1). The UCI may include an HARQ-ACK response to the PDSCH. FIG. 5 is based on the assumption that the SCS of the PDSCH is equal to the SCS of the PUCCH, and slot #n1=slot #(n+K0), for convenience, which should not be construed as limiting the present disclosure. When the SCSs are different, K1 may be indicated/interpreted based on the SCS of the PUCCH.

In the case where the PDSCH is configured to carry one TB at maximum, the HARQ-ACK response may be configured in one bit. In the case where the PDSCH is configured to carry up to two TBs, the HARQ-ACK response may be configured in two bits if spatial bundling is not configured and in one bit if spatial bundling is configured. When slot #(n+K1) is designated as an HARQ-ACK transmission timing for a plurality of PDSCHs, UCI transmitted in slot #(n+K1) includes HARQ-ACK responses to the plurality of PDSCHs.

Whether the UE should perform spatial bundling for an HARQ-ACK response may be configured for each cell group (e.g., by RRC/higher layer signaling). For example, spatial bundling may be configured for each individual HARQ-ACK response transmitted on the PUCCH and/or HARQ-ACK response transmitted on the PUSCH.

When up to two (or two or more) TBs (or codewords) may be received at one time (or schedulable by one DCI) in a corresponding serving cell (e.g., when a higher layer parameter maxNrofCodeWordsScheduledByDCI indicates 2 TBs), spatial bundling may be supported. More than four layers may be used for a 2-TB transmission, and up to four layers may be used for a 1-TB transmission. As a result, when spatial bundling is configured for a corresponding cell group, spatial bundling may be performed for a serving cell in which more than four layers may be scheduled among serving cells of the cell group. A UE which wants to transmit an HARQ-ACK response through spatial bundling may generate an HARQ-ACK response by performing a (bit-wise) logical AND operation on A/N bits for a plurality of TBs.

For example, on the assumption that the UE receives DCI scheduling two TBs and receives two TBs on a PDSCH based on the DCI, a UE that performs spatial bundling may generate a single A/N bit by a logical AND operation between a first A/N bit for a first TB and a second A/N bit for a second TB. As a result, when both the first TB and the second TB are ACKs, the UE reports an ACK bit value to a BS, and when at least one of the TBs is a NACK, the UE reports a NACK bit value to the BS.

For example, when only one TB is actually scheduled in a serving cell configured for reception of two TBs, the UE may generate a single A/N bit by performing a logical AND operation on an A/N bit for the one TB and a bit value of 1. As a result, the UE reports the A/N bit for the one TB to the BS.

There are plurality of parallel DL HARQ processes for DL transmissions at the BS/UE. The plurality of parallel HARQ processes enable continuous DL transmissions, while the BS is waiting for an HARQ feedback indicating successful or failed reception of a previous DL transmission. Each HARQ process is associated with an HARQ buffer in the medium access control (MAC) layer. Each DL HARQ process manages state variables such as the number of MAC physical data unit (PDU) transmissions, an HARQ feedback for a MAC PDU in a buffer, and a current redundancy version. Each HARQ process is identified by an HARQ process ID.

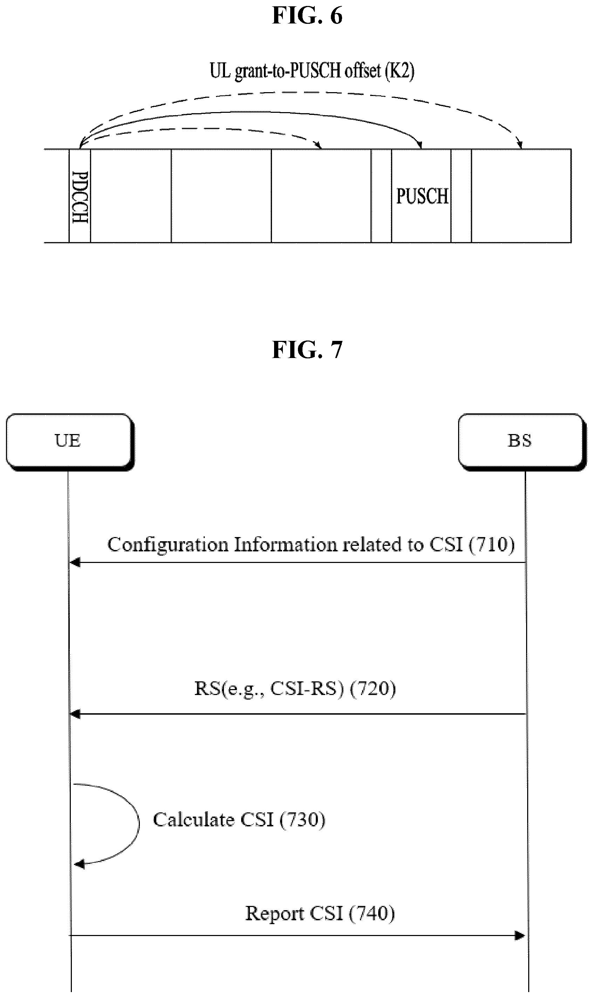

FIG. 6 illustrates an exemplary PUSCH transmission procedure. Referring to FIG. 6, the UE may detect a PDCCH in slot #n. The PDCCH includes DL scheduling information (e.g., DCI format 1_0 or 1_1). DCI format 1_0 or 1_1 may include the following information.

Frequency domain resource assignment: Indicates an RB set assigned to the PUSCH.

Time domain resource assignment: Indicates a slot offset K2 and the starting position (e.g., OFDM symbol index) and duration (e.g., the number of OFDM symbols) of the PUSCH in a slot. The starting symbol and length of the PUSCH may be indicated by a start and length indicator value (SLIV), or separately.

The UE may then transmit a PUSCH in slot #(n+K2) according to the scheduling information in slot #n. The PUSCH includes a UL-SCH TB.

CSI related operation

FIG. 7 shows an example of a CSI related procedure.

The UE receives configuration information related to CSI from the BS via RRC signaling (710). The CSI-related configuration information may include at least one of channel state information-interference measurement (CSI-IM)-related information, CSI measurement-related information, CSI resource configuration-related information, CSI-RS resource-related information, or CSI report configuration-related information.

- A CSI-IM resource may be configured for interference measurement (IM) of the UE. In the time domain, the CSI-IM resource set may be configured periodic, semi-persistent, or aperiodic. The CSI-IM resource may be configured to zero power (ZP)-CSI-RS for the UE. ZP-CSI-RS may be configured to be distinguished from non-zero power (NZP)-CSI-RS.

- The UE may assume that CSI-RS resource(s) for channel measurement configured for one CSI reporting and CSI-IM/NZP CSI-RS resource(s) for interference measurement have a QCL relationship with respect to 'QCL-TypeD' for each resource (when NZP CSI-RS resource(s) are used for interference measurement).

- CSI resource configuration may include at least one of a CSI-IM resource for interference measurement, an NZP CSI-RS resource for interference measurement, and an NZP CSI-RS resource for channel measurement. The channel measurement resource (CMR) may be a NZP CSI-RS for CSI acquisition, and the interference measurement resource (IMR) may be an NZP CSI-RS for CSI-IM and IM.

- A CSI-RS may be configured for one or more UEs. Different CSI-RS configurations may be provided for each UE, or the same CSI-RS configuration may be provided to a plurality of UEs. The CSI-RS may support up to 32 antenna ports. CSI-RSs corresponding to N (N being 1 or more) antenna ports may be mapped to N RE locations within a time-frequency unit corresponding to one slot and one RB. When N is 2 or more, N-port CSI-RSs may be multiplexed in CDM, FDM and/or TDM methods. The CSI-RS may be mapped to the remaining REs except for REs to which CORESET, DMRS, and SSB are mapped. In the frequency domain, the CSI-RS may be configured for the entire bandwidth, a partial bandwidth part (BWP), or a partial bandwidth. The CSI-RS may be transmitted in each RB within the bandwidth in which the CSI-RS is configured (i.e., density = 1), or the CSI-RS may be transmitted in every second RB (e.g., even or odd RB) (i.e., density = 1/2). When the CSI-RS is used as a tracking reference signal (TRS), a single-port CSI-RS may be mapped on three subcarriers in each resource block (i.e., density = 3). One or more CSI-RS resource sets may be configured for the UE in the time domain. Each CSI-RS resource set may include one or more CSI-RS configurations. Each CSI-RS resource set may be configured periodic, semi-persistent, or aperiodic.

- The CSI report configuration may include configuration for a feedback type, a measurement resource, a report type, and the like. The NZP-CSI-RS resource set may be used for CSI reporting configuration of a corresponding UE. An NZP-CSI-RS resource set may be associated with the CSI-RS or the SSB. A plurality of periodic NZP-CSI-RS resource sets may be configured as TRS resource sets. (i) The feedback types include a channel quality indicator (CQI), a precoding matrix indicator (PMI), a CSI-RS resource indicator (CRI), an SSB resource block indicator (SSBRI), a layer indicator (LI), a rank indicator (RI), a first layer (L1)-reference signal received strength (RSRP), and the like. (ii) The measurement resource may include configuration for a downlink signal and/or downlink resource on which measurement is performed by the UE to determine feedback information. The measurement resource may be configured as a ZP and/or NZP CSI-RS resource set associated with the CSI report configuration. The NZP CSI-RS resource set may include a CSI-RS set or an SSB set. For example, the L1-RSRP may be measured for a CSI-RS set or for an SSB set. (iii) The report type may include configuration for a time when the UE performs a report and an uplink channel. The reporting time may be configured to be periodic, semi-persistent or aperiodic. The periodic CSI report may be transmitted on a PUCCH. The semi-persistent CSI report may be transmitted on a PUCCH or a PUSCH based on a MAC CE indicating activation/deactivation. The aperiodic CSI report may be indicated by DCI signaling. For example, a CSI request field of an uplink grant may indicate one of various report trigger sizes. The aperiodic CSI report may be transmitted on a PUSCH.

The UE measures CSI based on configuration information related to CSI. The CSI measurement may include receiving the CSI-RS (720) and acquiring the CSI by computing the received CSI-RS (730).

The UE may transmit a CSI report to the BS (740). For the CSI report, the time and frequency resource available to the UE are controlled by the BS. Channel state information (CSI) includes at least one of a channel quality indicator (CQI), a precoding matrix indicator (PMI), a CSI-RS resource indicator (CRI), a SS/PBCH block resource indicator (SSBRI), a layer indicator (LI), a rank indicator (RI), an L1-RSRP, and/or an L-SINR.

A time domain behavior of CSI reporting supports periodic, semi-persistent, aperiodic. i) Periodic CSI reporting is performed in a short PUCCH, a long PUCCH. Periodicity and a slot offset of periodic CSI reporting may be configured by RRC and refers to a CSI-ReportConfig IE. ii) SP (semi-periodic) CSI reporting is performed in a short PUCCH, a long PUCCH, or a PUSCH. For SP CSI in a short/long PUCCH, periodicity and a slot offset are configured by RRC and a CSI report is activated/deactivated by separate MAC CE/DCI. For SP CSI in a PUSCH, periodicity of SP CSI reporting is configured by RRC, but a slot offset is not configured by RRC and SP CSI reporting is activated/deactivated by DCI (format 0_1). For SP CSI reporting in a PUSCH, a separated RNTI (SP-CSI C-RNTI) is used. An initial CSI report timing follows a PUSCH time domain allocation value indicated by DCI and a subsequent CSI report timing follows a periodicity configured by RRC. DCI format 0_1 may include a CSI request field and activate/deactivate a specific configured SP-CSI trigger state. SP CSI reporting has activation/deactivation equal or similar to a mechanism having data transmission in a SPS PUSCH. iii) Aperiodic CSI reporting is performed in a PUSCH and is triggered by DCI. In this case, information related to trigger of aperiodic CSI reporting may be delivered/indicated/configured through MAC-CE. For AP CSI having an AP CSI-RS, AP CSI-RS timing is configured by RRC and timing for AP CSI reporting is dynamically controlled by DCI.

Quasi-co location (QCL)

When the channel property of an antenna port is to be inferred from a channel of another antenna port, the two antenna ports are quasi co-located. The channel property may include one or more of delay spread, Doppler spread, frequency/Doppler shift, average received power, received Timing/average delay, and a spatial RX parameter.

A list of a plurality of transmission configuration indicator (TCI) state configurations may be configured in the UE through a higher layer parameter PDSCH-Config. Each TCI state is linked to a QCL configuration parameter between one or two DL reference signals and the DM-RS port of a PDSCH. The QCL may include qcl-Type1 for a first DL RS and qcl-Type2 for a second DL RS. The QCL type may correspond to one of the following.

- 'QCL-TypeA': {Doppler shift, Doppler spread, average delay, delay spread}
- 'QCL-TypeB': {Doppler shift, Doppler spread}
- 'QCL-TypeC': {Doppler shift, average delay}
- 'QCL-TypeD': {Spatial Rx parameter}

Operations related to multiple transmission and reception points (M-TRPs)

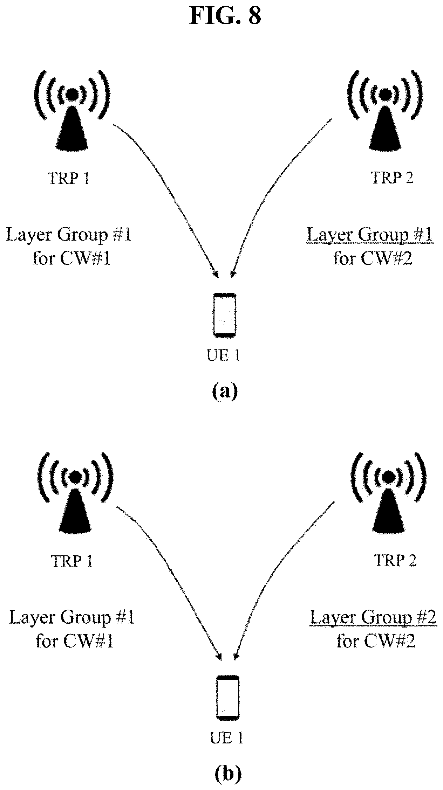

FIG. 8 illustrates multi-TRP (M-TRP) transmission. Referring to FIG. 8(a), a group of layers transmitting the same codeword (CW) (or transport block, TB) correspond to different TRPs. Referring to FIG. 8(b), different CWs are transmitted through layer groups of different TRPs. In this case, it may be assumed that the TBs corresponding to CW #1 and CW #2 in the drawing are the same. In other words, CW #1 and CW #2 mean that the same TB is converted into different CWs through channel coding, etc., by different TRPs. Therefore, it may be considered as an example of repeated transmission of the same TB. In the case of FIG. 8(b), there may be a drawback of a higher coding rate corresponding to the TB, compared to FIG. 8(a). However, FIG. 8(b) has the advantage that, depending on the channel environment, the coding rate may be adjusted by indicating different redundancy version (RV) values for encoded bits generated from the same TB or the modulation order of each CW may be adjusted.

According to the method illustrated in FIGS. 8(a) and 8(b), the same TB is repeatedly transmitted through different layer groups. In addition, as each layer group is transmitted by different TRPs/panels, the probability that the UE successfully receives data may increase. This is referred to as a spatial division multiplexing (SDM) based M-TRP URLLC transmission method. The layers belonging to different layer groups are transmitted through DMRS ports that belong to different DMRS code division multiplexing (CDM) groups.

Although the aforementioned M-TRP-related content has been explained based on the SDM method using different layers, it may be extended and applied to an FDM method based on different frequency domain resources (e.g., RB/PRB sets) and/or a TDM method based on different time domain resources (e.g., slots, symbols, sub-symbols, etc.).

**Overhead reduction for 8-Tx UL codebook**

A method of reducing the overhead of i) an SRS resource indication (SRI) and/or a transmitter precoder matrix indication (TPMI) for codebook-based transmission and ii) an SRI for non-codebook-based transmission from a UE (8TX UE) supporting UL transmission through 8 antenna ports has recently been discussed. It is also necessary to specify whether to use separate fields or a single field and whether to use an existing field or define a new field, for the indication.

The disclosure discloses embodiments of a method of reducing the overhead of a UL transmission indication (e.g., DCI payload), when a multi-panel or multi-antenna UE performs 8Tx UL transmission to one or multiple TRPs in a codebook-based or non-codebook-based manner.

First, UL transmission according to the current NR standard will be described briefly. UL transmissions are divided into codebook-based UL transmission and non-codebook-based UL transmission. In the codebook-based UL transmission, a UE transmits an SRS (e.g., non-precoded SRS) to a BS, the BS obtains UL channel information through the SRS and indicates codebook information (e.g., a TRI and a TPMI and/or an SRI) suitable for UL data transmission to the UE based on the UL channel information, and the UE performs PUSCH transmission using the indicated information. On the other hand, in the non-codebook-based UL transmission, the UE transmits an SRS (e.g., precoded SRS) to the BS by UL beamforming, and the BS measures the SRS and indicates a combination of SRSs (e.g., a UL beam combination) to be used for PUSCH transmission to the UE by an SRI field.

In the codebook-based UL transmission, a bit-field size (e.g., 4, 5, or 6 bits) is determined variably based on max rank information and a codebook subset, which are RRC-configured for the UE, and in the non-codebook-based UL transmission, the bit-field size is also determined variably based on an $L_{max}$ value and an $N_{SRS}$ value.

Since the maximum number of ports supported for legacy UL transmission is 4, the legacy UL transmission has a smaller codebook size and a smaller number of SRS combinations than 8Tx proposed in the disclosure.

In the case of an 8Tx or more UL transmission, a method of indicating an SRI and/or a TRI and/or a TPMI for effective UL transmission will be proposed below. Particularly, when the number of transmission antennas of the UE increases to 8, an 8Tx UL transmission is proposed which may be used especially for UE types such as fixed wireless access (FWA), customer premises equipment (CPE), vehicle, and industrial device.

**(1) Proposal 1**

According to an embodiment, in codebook-based UL transmission, a transmit rank indicator (TRI) field and a transmit precoding matrix indicator (TPMI) field are separately indicated, and the TRI field is indicated by a MAC-CE. The TPMI field is interpreted differently based on a TRI value indicated by the MAC-CE.

Compared to a legacy operation in which a TRI and a TPMI are jointly encoded and indicated by one field of DCI, the TRI field and the TPMI field are separately indicated through different channels in Proposal 1. When this method is used, the TRI field may be indicated by a MAC-CE or DCI different from that of the TPMI, and the size of the TPMI field in DCI indicating a TPMI is determined based on a TRI with the largest number of TPMIs among TRIs for respective ranks. For example, it is assumed that the number of TPMIs for each rank is given for an 8Tx UL codebook, as Rank1: 16, Rank2: 20, Rank3: 12, Rank4: 8, Rank5: 1, Rank6: 1, Rank 7: 1, and Rank 8: 1. Then, a 3-bit TRI field is indicated by a MAC-CE or another DCI, the size of the TPMI field is determined as 5 bits (to include 20 of Rank2), and a TPMI is indicated by DCI. When the TRI indicates 5 to 8, one TPMI is included in the above example, and thus the decoding of the field may be dropped or the field may be considered as reserved, thereby reducing the decoding complexity of the UE. In other words, when the number of TPMIs indicated by a separately indicated TRI is one, the decoding of the TPMI field may be dropped or the TPMI field may be considered as reserved.

A TPMI value is based on a TRI value indicated by the most recently successfully received MAC-CE or DCI. Alternatively, the TRI value may be applied from a time after a TRI value indicated by the most recent MAC-CE or DCI is successfully received and an HARQ-ACK for it is transmitted to the BS. For example, in the case where a new TRI value (e.g., new TRI=2, previous TRI value=1) is received at time n and an HARQ-ACK for it is transmitted at time n+4, when a TPMI is indicated by another DCI at time n+2, the TPMI may be interpreted as for TRI=1, and a TPMI received after time n+4 may be interpreted as for TRI=2. When detection of an initial received TRI value is failed and thus a TPMI should be interpreted without the TRI value, a default TRI value may be specified/set, for example, default TRI=1.

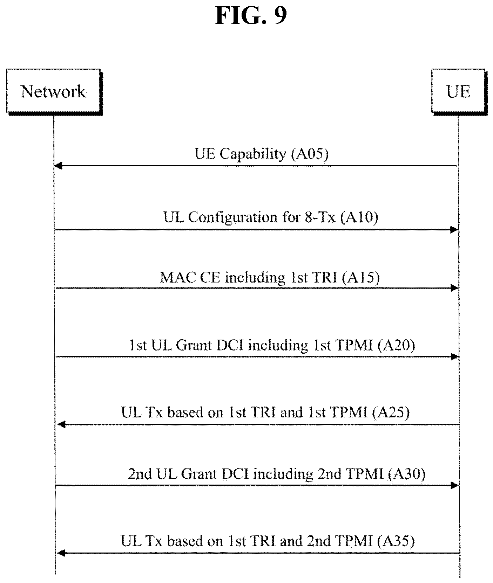

FIG. 9 illustrates an implementation example of a UL transmission according to Proposal 1.

Referring to FIG. 9, a UE reports UE Capability to a network (A05). The UE Capability may include information about a maximum number of UL transmission antennas supported by the UE. The UE may report that it is capable of using up to 8 transmission antennas for UL transmission, for example.

The network may transmit a UL transmission configuration to the UE by higher layer signaling based on the UE Capability (A10). The UL transmission configuration may include configuration information for 8-Tx antenna UL transmission as described above.

The network may transmit first transmission rank information (TRI) to the UE through a MAC CE (A15). The first TRI may indicate at least one (or at least some subsamples) of 8-Tx codebooks. For convenience of description, it is assumed that a first codebook is indicated by the first TRI.

The network may transmit first DCI including a first TPMI to the UE (A20). The first TPMI may indicate one of precoding matrices included in the first codebook indicated by the first TRI. For convenience of description, it is assumed that the first TPMI indicates a first precoding matrix in the first codebook.

The UE may transmit a UL signal based on the first TRI and the first TPMI (A25). For example, the UE may perform a first PUSCH transmission through 8 antennas based on the first precoding matrix in the first codebook.

The network may transmit second DCI including a second TPMI to the UE (A30). The second TPMI may indicate one of the precoding matrices included in the first codebook indicated by the first TRI. For convenience of description, it is assumed that the second TPMI indicates a second precoding matrix in the first codebook.

The UE may transmit a UL signal based on the first TRI and the second TPMI (A25). For example, the UE may perform a second PUSCH transmission through 8 antennas based on the second precoding matrix in the first codebook.

## (2) Proposal 2

According to an embodiment, in codebook-based UL transmission, a plurality of codebook subsets are configured based on RRC or a prior agreement between the BS and the UE, and a subset to be used is indicated by a MAC-CE. Then, an RI/TPMI to be used finally is indicated by DCI, and the UE may transmit a PUSCH using this information.

In Proposal 2, a TRI and a TPMI are separately configured and indicated through different channels. In this case, the TPMI has dependency on the TRI, which may cause an error propagation problem. To further alleviate this and reduce the payload of DCI, a plurality of codebook subsets (e.g., a TPMI group for each rank or rank group) are configured by RRC or a prior agreement, and a subset to be used is indicated by a MAC-CE. For example, it is assumed that group 1: (TRI=1, TPMI=16) + (TRI=2, TPMI=20), group 2: (TRI=3, TPMI=12) + (TRI=4, TPMI=8), group 3: (TRI=5, TPMI=1) + (TRI=6, TPMI=1), and group 4: (TRI=7, TPMI=1) + (TRI=8, TPMI=1) are configured. (TRI=X, TPMI=Y) means that the TRI value is X and there are Y TPMIs for the TRI. The TPMI size is determined based on the largest sum of TPMIs in a group, and in the above example, the TPMI size is determined as 6 bits based on group 1 (16+20=36). In the above example, a group to be selected may be indicated by 2 bits of a MAC-CE or another DCI. For example, when group 2 is selected, 6-bit code points indicated by the TPMI field are used to indicate a total of 12+8 TPMIs for TRI=3 and TRI=4. 20 code points in 6 bits may be mapped to an LSB or MSB, and the remaining code points may be processed as reserved. Although the above example is designed to include TPMIs corresponding to two TRIs equally in each group, each group may have a different number of TRIs and/or TPMIs. The number of configured/indicated groups and/or how a TRI/TPMIs are mapped to each group may be configured by RRC or a prior agreement.

Similar to Proposal 1, a TRI/TPMI value is based on a group id (or codebook subset) value indicated by the most recently successfully received MAC-CE or DCI. Alternatively, the group id (or codebook subset) value may be applied after a group id (or codebook subset) value indicated by the most recent MAC-CE or DCI is successfully received and an HARQ-ACK for it is transmitted to the BS. For example, in the case where a new group id (or codebook subset) value (e.g., new group=2 and previous group value=1) is received at time n and an HARQ-ACK for it is transmitted at time n+4, when a TRI/TPMI is indicated by another DCI at time n+2, the TRI/TPMI is interpreted as a TPMI within group=1, and the TRI/TPMI received after time n+4 may be interpreted as a TPMI within group = 2. When detection of an initial received group value is failed and a TRI/TPMI needs to be interpreted without the group value, a default group value may be specified/set, for example, default group = 1.

The above codebook subset may be set/configured based on the legacy coherency capability (e.g., non/partial/-fully coherent among Tx antenna ports) of the UE.

Further, in Proposal 2, the codebook subset configuration may include a different number of TPMIs per rank in each group. For example, group 1: (TRI=1, TPMI=16) + (TRI=2, TPMI=16) and group 2: (TRI=1, TPMI=12) + (TRI=2, TPMI=20) may be configured. The number of TPMIs for each specific rank may be set differently for each group. That is, a codebook subset may be configured to enable TPMI overlap between groups.

**Proposal 2-1**

In order to reduce DCI overhead in codebook-based UL transmission, a codebook subsampling pattern may be preconfigured or may be configured and indicated by RRC/a MAC-CE.

Codebook subsampling may be used to indicate a combination of TRI/TPMI that is not indicated by DCI or is indicated by DCI in a preset codebook to reduce the overhead of a TRI/TPMI indication. For example, an 8Tx codebook including Rank1: 16 and Rank2: 20 is assumed. For example, when a pattern is indicated to select only even-numbered/odd-numbered TPMIs, the UE may assume a new codebook subset including 8 TPMIs for RANK1 and 10 TPMIs for RANK2, and interpret a TRI/TPMI indication based on this. The codebook subsampling may be configured/indicated on a rank basis, or may be configured on a rank-group basis or rank-commonly.

**(3) Proposal 3**

According to an embodiment, when the TRI field and the TPMI field are configured/indicated separately in codebook-based UL transmission, even if max rank = 8, the size of the TRI field is fixed to 2 bits, and an accurate TRI may be interpreted from the TRI field in conjunction with another field.

In the above example, for example, when max rank = 8, it is desirable that the size of the TRI field is set to 3 bits. However, when 8 layers are supported, codeword layer mapping may be changed. For example, when one TB is indicated, the TRI ranges from 1 to 4, and when two TBs are indicated, the TRI ranges from 5 to 8. Therefore, whether the TRI ranges from 1 to 4 or from 5 to 8 may be determined in conjunction with a field indicating the number of TBs. For example, a field (1 bit) explicitly indicating the number of TBs to be transmitted by the UE may be introduced, or the number of transmitted TBs may be implicitly known from the number of MCS, NDI, or RV fields, and an indicated TRI range may be identified using this information. For example, when two MCS fields are configured, the UE may identify that two TBs are transmitted, and thus that an indicated TRI ranges from 5 to 8, and the value of the TRI is indicated in 2 bits.

**(4) Proposal 4**

For non-codebook-based UL transmission, a plurality of SRS combinations may be configured by RRC or a prior agreement between the BS and the UE, and a combination to be used is indicated by a MAC-CE. Then, an SRS combination to be used is finally indicated by DCI, and the UE may transmit a PUSCH using this information.

Similar to Proposal 1 and Proposal 2, a group for an actual SRS combination may be configured by a MAC-CE, and a combination to be selected within the group configured by the MAC-CE may be indicated/configured by DCI in Proposal 4. For example, it is indicated that group 1 = 8 choose 1 + 8 choose 2 + 8 choose 3, group 2 = 8 choose 4 + 8 choose 5 + 8 choose 6, and group 3 = 8 choose 6 + 8 choose 7 + 8 choose 8, and when group 1 is indicated by a MAC-CE or another DCI, a combination may be indicated from among 8+28+56 = 92 by DCI. In Proposal 4, the size of an SRI field in DCI is also determined based on the number of combinations in a group with the largest number of combinations among the groups which may be configured by a MAC-CE. The number of configured/indicated groups and/or how the combinations are mapped to the respective groups may be configured by RRC or a prior agreement.

**(5) Proposal 5**

In codebook-based UL or non-codebook-based UL, a max rank value or an $L_{max}$ and/or $N_{SRS}$ value, which is conventionally configured by RRC, may be updated through a MAC-CE.

As described above, the size of the TRI/TPMI field and the size of the SRI field in DCI are changed according to a max rank value, an $L_{max}$ value, and/or an $N_{SRS}$ value configured in the legacy codebook-based or non-codebook-based UL. In Proposal 5, it is proposed that the parameters, max rank, $L_{max}$, and/or $N_{SRS}$ are updated through a MAC-CE, and the size of a field in DCI is changed based on values indicated by the MAC-CE. However, when the decoding of the parameters indicated by the MAC-CE is failed, ambiguity may occur in the assumption of the field size between the BS and the UE. Therefore, when a time point after transmission of an HARQ-ACK for successful reception of a value updated based on the MAC-CE to the BS is n, it may be agreed that the new updated value is applied from time n+X, and an X value, which is pre-agreed or configured by the BS, may be indicated as 0 or a positive value. In Proposal 5, when the $L_{max}$ (or $N_{SRS}$) value is reduced by the MAC CE, it may be ambiguous which SRS resources among up to 8 SRS resources configured in a non-codebook-based SRS resource set will be used to configure the SRI field. To this end, it may be considered as a rule base that, for example, $L_{max}$ (/$N_{SRS}$) resources from an SRS resource with a lowest ID/highest ID are mapped to the SRI field, or

$L_{max}$ (/$N_{SRS}$) resources are mapped to the SRI field in the order of transmitted SRS resources. Alternatively, the BS may indicate/configure a pattern/mapping to be used to/for the UE by RRC.

Further, according to the recent standard discussion, one of the following schemes may be used as an SRS configuration for non-codebook UL of an 8Tx UE.

- Alt1: one SRS resource set including up to 8 single-port SRS resources is configured.
- Alt2: Up to 2 SRS resource sets each including up to 4 single-port SRS resources are configured.
- Alt3: Both Alt.1 and Alt.2 are supported.

When Alt 3 is supported, a codebook subset/SRS combination to be used may vary depending on an SRS resource configuration scheme. That is, a codebook subset/SRS combination used in Alt1 and a codebook subset/SRS combination used in Alt 2 may be configured/indicated differently. This is because a transmission method assumed by the UE, for example, S-TRP transmission or M-TRP transmission, may vary depending on the SRS configuration scheme, and thus the used codebook or SRS combination may vary. For example, Proposal 1 to Proposal 5 may be applied differently depending on the SRS resource configuration scheme.

The above proposals may be used alone or in combination.

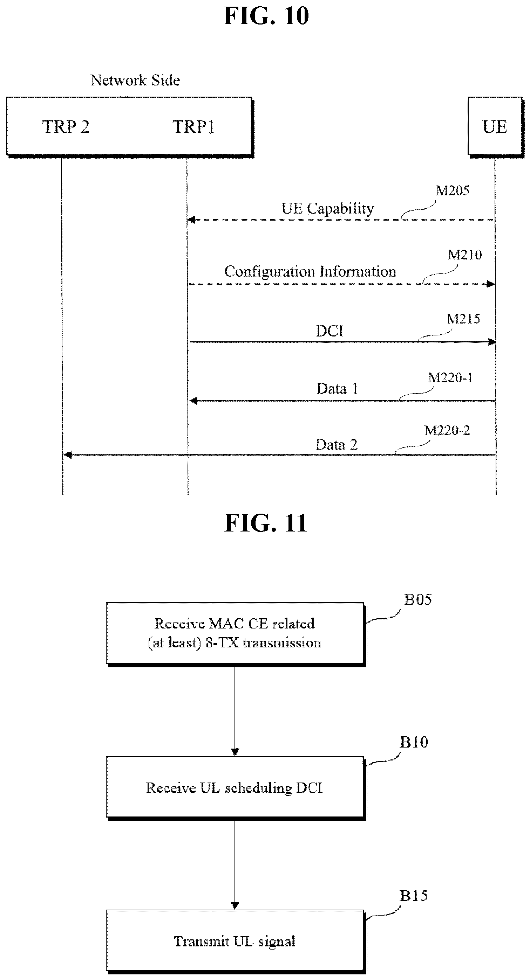

FIG. 10 illustrates a (single) DCI-based transmission/reception procedure in a multiple TRP situation.

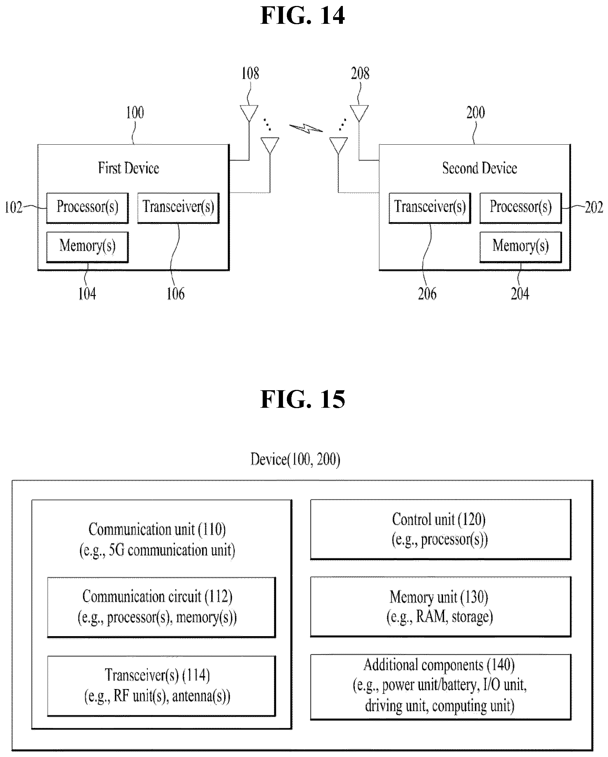

Specifically, FIG. 10 illustrates signaling between a network side (e.g. TRP 1 and TRP 2) and a UE in a situation of multiple TRPs (i.e. M-TRPs or multiple cells. Hereinafter, all TRPs may be replaced with cells) to which the proposed method may be applied. The UE/network side is only an example, and may be replaced with various devices as described in FIG. 14 to FIG. 16. FIG. 10 is only for convenience of description, and does not limit the scope of the present disclosure. In addition, some step(s) illustrated in FIG. 10 may be skipped depending on a situation and/or configuration. In addition, although FIG. 10 illustrates an example of single DCI-based M-TRP transmission, the method described in FIG. 10 may be extended to multi-DCI-based M-TRP transmission. In addition, the operations of the network side and the UE in FIG. 10 may be based on the above-described UL transmission/reception operation/multi-TRP-related operation.

Referring to FIG. 10, signaling between two TRPs and a UE is considered, for convenience of description. However, it is obvious that the signaling method may be extended to signaling between a plurality of TRPs and a plurality of UEs. In the following description, the network side may be one BS including a plurality of TRPs or one cell including a plurality of TRPs. For example, an ideal/non-ideal backhaul may be established between TRP 1 and TRP 2 included in the network side. In addition, although the following description is given in the context of a plurality of TRPs, it may be equally extended to transmission through a plurality of panels. Further, an operation of receiving a signal from TRP1/TRP2 by a UE in the disclosure may also be interpreted/described as (or may also be) an operation of receiving a signal from the network side (via/using TRP1/2) by the UE, and an operation of transmitting a signal to TRP1/TRP2 by a UE in the disclosure may also be interpreted/described as (or may also be) an operation of transmitting a signal to the network side (via/using TRP1/2) by the UE or vice versa.

In the disclosure, a BS may be a general term for an object that performs data transmission and reception with a UE. For example, the BS may be a concept including one or more transmission points (TPs), one or more transmission and reception points (TRPs), or the like. In addition, a TP and/or a TRP may include a panel or transmission and reception unit of a BS. Although the following description is given in the context of "TRP", "TRP" may be replaced with terms such as panel, antenna array, cell (e.g., macro cell/small cell/ pico cell), TP, and BS (gNB), as described above. Further, as described above, a TRP may be identified by information (e.g., an index or an ID) about a CORESET group (or CORESET pool). For example, when one UE is configured to perform transmission and reception with a plurality of TRPs (or cells), this may mean that a plurality of CORESET groups (or CORESET pools) are configured for the UE. Such configuration of a CORESET group (or CORESET pool) may be performed by higher layer signaling (e.g., RRC signaling).

Specifically, FIG. 10 illustrates signaling when a UE receives a single DCI (i.e., when one TRP transmits DCI to the UE) in an M-TRP situation (or an M-cell situation. Hereinafter, all TRPs may be replaced with cells/panels, or when a plurality of CORESETs (/CORESET groups) are configured by one TRP, they may also be assumed as M-TRPs). In FIG. 1, it is assumed that TRP 1 is a representative TRP transmitting DCI.

The UE may transmit UE Capability to the network side via/using TRP 1 (and/or TRP 2) (M205). For example, the UE Capability may include information such as whether the UE supports the above-described proposed methods/a UE capability related to a supported operation.

For example, the UE Capability may include the number of supported antenna ports (# of supported antenna ports)/the number of ports per panel/the number of simultaneously transmittable panels/coherency capability (e.g. nonCoherent, partialNonCoherent, fullCoherent)/full power transmission capability/supported full Tx mode/supported TPMI group/port switching capability/TX chain related information/whether M-TRP transmission is supported/the number of transmittable SRS resources/multiplexing information (e.g. TDM/FDM/SDM). When the UE capability information is predefined/pre-agreed, the step may be skipped.

For example, the operation of transmitting the UE capability to the network side (100/200 of FIG. 14) by the UE (100/200 of FIGS. 14 to 16) in step M205 may be implemented by a device in FIGS. 14 to 16, which will be described below. For example, referring to FIG. 14, at least one processor 102 may control at least one transceiver 106 and/or at least one memory 104 to transmit the UE capability, and the at least one transceiver 106 may transmit the UE capability to the network side.

The UE may receive configuration information related to multiple TRP-based transmission and reception from the network side through/using TRP 1 (and/or TRP 2) (M210). For example, the configuration information may include information related to a configuration (i.e. TRP configuration) of the network side/resource information (resource allocation) related to the multiple TRP-based transmission and reception/system information (SI)/scheduling information/PUSCH-Config (TS 38.331 PUSCH Config). For example, the configuration information may include information related to CB subset restriction/CB subsampling (e.g. CB subset restriction/CB subsampling pattern/bitmap). The configuration information may be transmitted through higher layer signaling (e.g. RRC signaling or a MAC-CE). In addition, when the configuration information is predefined or preconfigured, the step may be skipped. For example, information required for an operation in the afore-described proposed method may be included in the configuration information.

For example, the operation of receiving the configuration information related to the multiple TRP-based transmission and reception from the network side (100/200 of FIG. 14) by the UE (100/200 of FIG. 14 to FIG. 16) in step M210 step described above may be implemented by the device of FIG. 14 to FIG. 16 described below. For example, referring to FIG. 14, the at least one processor 102 may control the at least one transceiver 106 and/or the at least one memory 104 to receive the configuration information related to the multiple TRP-based transmission and reception, and the at least one transceiver 106 may receive the configuration information related to the multiple TRP-based transmission and reception from the network side.

The UE may receive DCI from the network side through/using TRP 1 (M215). The DCI may be transmitted through a control channel (e.g. PDCCH). For example, the DCI may include information for scheduling a UL transmission (e.g. UL scheduling information)/precoding-related information. For example, the precoding-related information may include information about an SRI/TPMI/TRI/MCS. For example, the DCI may be DCI format 0_1 or DCI format 0_0. For example, PUSCH scheduling for each of multiple cells may be performed simultaneously through the DCI.

For example, a TRI/TPMI/SRI may be indicated/configured in consideration of transmission/reception through a plurality of panels/ports, as described in the foregoing proposed method. For example, a TRI for one (e.g., a first TRP (e.g., which may be determined based on an index such as a CoresetID/TCI state) of a plurality of TRPs may be indicated, while the same TRP value is assumed to be applied to the other TRPs. For example, a common/individual TRI for each TRP may be indicated by a higher layer configuration, and a TPMI may be indicated by DCI. For example, the ranks of the other TRPs may be configured to be less than the rank of a TRP in the best channel environment, as a reference rank, in consideration of channel environments, or a predefined value may be used as the ranks of the other TRPs. For example, a TPMI for a specific rank combination may be indicated. For example, the size of a TPMI field may be determined based on the largest of the numbers of TPMIs for respective ranks. For example, a rank for one (e.g., a first TRP (e.g., which may be determined based on an index such as a CoresetID/TCI state)) of a plurality of TRPs may be indicated, an indication of the ranks of the other TRPs may be omitted, and an SRS resource combination may be indicated for a transmission with the corresponding rank.

For example, CB subset restriction/CB subsampling may be configured based on the DCI. For example, a CB subset may be configured based on the index (e.g., odd number/even number) of a TPMI. For example, subsampling may be applied only to a specific rank. For example, subsampling may be performed based on co-phasing between ports/port groups.

Further, for example, the network side may perform a procedure of acquiring information about a UL channel state (i.e., UL CSI acquisition) with the UE, before scheduling a UL transmission. For example, the information about the channel state between the UE and the network side may be acquired based on the afore-described CSI-related operation.

For example, the operation of receiving the DCI from the network side (100/200 of FIG. 14) by the UE (100/200 of FIG. 14 to FIG. 16) in step M215 described above may be implemented by the device of FIG. 14 to FIG. 16, which will be described below. For example, referring to FIG. 14, the at least one processor 102 may control the at least one transceiver 106 and/or the at least one memory 104 to receive the DCI, and the at least one transceiver 106 may receive the DCI from the network side.

The UE may transmit Data 1 to the network side through/using TRP 1 (M220-1). In addition, the UE may transmit Data 2 to the network side through/using TRP 2 (M220-2). The data (e.g. Data 1 and Data 2) may be transmitted through a data channel (e.g. PUSCH). In addition, step M220-1 and step M220-2 step may be performed simultaneously, or one of both may be performed earlier than the other. For example, Data1/Data2 may have been precoded and include an RS (e.g. DMRS) for data decoding. For example, the transmission of Data 1 and/or Data 2 may be performed based on the proposed methods described above.

For example, the operation of transmitting Data1/Data2 to the network side (100/200 of FIG. 14) by the UE (100/200 of FIG. 14 to FIG. 16) in step M220-1/M220-2 described above may be implemented by the device of FIG. 14 to FIG. 16, which will be described below. For example, referring to FIG. 14, the at least one processor 102 may control the at least one transceiver 106 and/or the at least one memory 104 to transmit Data1/Data2, and the at least one transceiver 106 may transmit Data1/Data2 to the network side.

As described above, the above network side/UE signaling and operation may be implemented by the devices (e.g. FIGS. 14 to 16) to be described below. For example, the network side (e.g. TRP 1/TRP 2) may correspond to a first wireless device, and the UE may correspond to a second wireless device, and in some cases, the opposite case may also be considered.

For example, the above network side/UE signaling and operation may be processed by at least one processor (e.g. 102 or 202) of FIGS. 14 to 16, and the above network side/UE signaling and operation may be stored in a memory (e.g. the at least one memory (e.g. 104 or 204) of FIG. 14) in the form of instructions/a program (e.g. instructions or executable codes) for operating the at least one processor (e.g. 102 or 202) of FIGS. 14 to 16.

FIG. 11 illustrates an implementation example of a method of operating a UE in a wireless communication system according to an embodiment of the present disclosure.

Referring to FIG. 11, the UE may receive a MAC CE related to a transmission based on at least 8 UL antenna ports. (B05).

The UE may receive DCI for UL scheduling, including a TPMI field, through a PDCCH (B10).

The UE may transmit a UL signal based on the DCI (B15).

Based on that the DCI is for the transmission based on the at least 8 UL antenna ports, a precoding matrix set may be determined through the MAC CE. A precoding matrix for the UL signal may be determined from the precoding matrix set determined through the MAC CE, based on an index value in the TPMI field.

The MAC CE may include a TRI field. The precoding matrix set may be determined based on a TRI.

The precoding matrix set may be a codebook, and one of a plurality of codebooks configured for the UE may be determined by the MAC CE.

The precoding matrix set determined through the MAC CE may be a subset of precoding matrices included in one codebook. A plurality of subsets of the precoding matrices included in the one codebook may be configured for the UE through higher layer signaling. One of the plurality of subsets may be determined through the MAC CE.

The MAC CE may include information about a codebook subsampling pattern for determining the precoding matrix set.

The precoding matrix set determined through the MAC CE may be used after a predetermined time offset from a HARQ-ACK for the MAC CE. A default precoding matrix set may be used from the reception of the MAC CE until before application of the precoding matrix set.

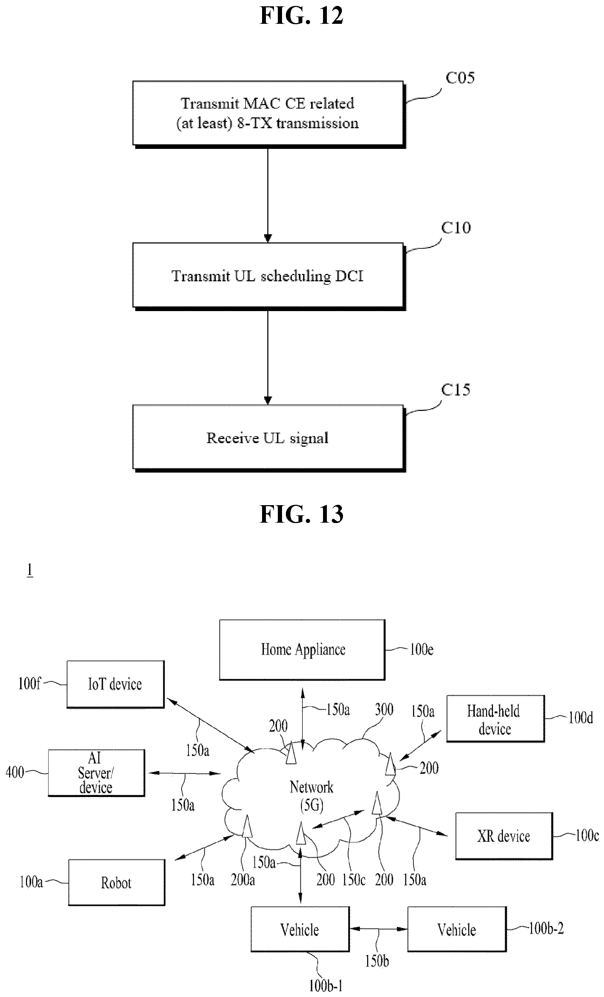

FIG. 12 illustrates an example of a method of operating a BS in a wireless communication system according to an embodiment of the present disclosure.

Referring to FIG. 12, the BS may transmit a MAC CE related to a reception based on at least 8 UL antenna ports (C05).

The BS may transmit DCI for UL scheduling, including a TPMI field, through a PDCCH (C10).

The BS may receive a UL signal based on the DCI (C15).

Based on that the DCI is for the reception based on the at least 8 UL antenna ports, a precoding matrix set may be determined through the MAC CE. A precoding matrix for the UL signal may be determined/indicated from the precoding matrix set determined through the MAC CE, based on an index value in the TPMI field.

The MAC CE may include a TRI field. The precoding matrix set may be determined based on a TRI.

The precoding matrix set may be a codebook, and one of a plurality of codebooks configured for the UE may be determined/indicated by the MAC CE.

The precoding matrix set determined through the MAC CE may be a subset of precoding matrices included in one codebook. A plurality of subsets of the precoding matrices included in the one codebook may be configured for the UE through higher layer signaling. One of the plurality of subsets may be determined/indicated through the MAC CE.

The MAC CE may include information about a codebook subsampling pattern for determining/indicating the precoding matrix set.

The precoding matrix set determined through the MAC CE may be used after a predetermined time offset from a HARQ-ACK for the MAC CE. A default precoding matrix set may be used from the reception of the MAC CE until before application of the precoding matrix set.

FIG. 13 illustrates a communication system 1 applied to the present disclosure.

Referring to FIG. 13, a communication system 1 includes wireless devices, Base Stations (BSs), and a network. Herein, the wireless devices represent devices performing communication using Radio Access Technology (RAT) (e.g., 5G New RAT (NR)) or Long-Term Evolution (LTE)) and may be referred to as communication/radio/5G devices. The wireless devices may include, without being limited to, a robot 100a, vehicles 100b-1 and 100b-2, an eXtended Reality (XR) device 100c, a hand-held device 100d, a home appliance 100e, an Internet of Things (IoT) device 100f, and an Artificial Intelligence (AI) device/server 400. For example, the vehicles may include a vehicle having a wireless communication function, an autonomous driving vehicle, and a vehicle capable of performing communication between vehicles. Herein, the vehicles may include an Unmanned Aerial Vehicle (UAV) (e.g., a drone). The XR device may include an Augmented Reality (AR)/Virtual Reality (VR)/Mixed Reality (MR) device and may be implemented in the form of a Head-Mounted Device (HMD), a Head-Up Display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter. For example, the BSs and the network may be implemented as wireless devices and a specific wireless device 200a may operate as a BS/network node with respect to other wireless devices.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g., Vehicle-to-Vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a, 150b, or 150c may be established between the wireless devices 100a to 100f/BS 200, or BS 200/BS 200. Herein, the wireless communication/connections may be established through various RATs (e.g., 5G NR) such as uplink/downlink communication 150a, sidelink communication 150b (or, D2D communication), or inter BS communication (e.g., relay, Integrated Access Backhaul (IAB)). The wireless devices and the BSs/the wireless devices may transmit/receive radio signals to/from each other through the wireless communication/connections 150a and 150b. For example, the wireless communication/connections 150a and 150b may transmit/receive signals through various physical channels. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 14 illustrates wireless devices applicable to the present disclosure.

Referring to FIG. 14, a first wireless device 100 and a second wireless device 200 may transmit radio signals through a variety of RATs (e.g., LTE and NR). Herein, {the first wireless device 100 and the second wireless device 200} may correspond to {the wireless device 100x and the BS 200} and/or {the wireless device 100x and the wireless device 100x} of FIG. 13.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operational flowcharts disclosed in this document. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver 106 and then store information obtained by processing the second information/signals in the memory(s) 104. The memory(s) 104 may be connected to the processor(s) 102 and may store a variety of information related to operations of the processor(s) 102. For example, the memory(s) 104 may store software code including commands for performing a part or the entirety of processes controlled by the processor(s) 102 or for performing the descriptions, functions, procedures, proposals, methods, and/or operational flowcharts disclosed in this document. Herein, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 may be interchangeably used with Radio Frequency (RF) unit(s). In the present disclosure, the wireless device may represent a communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operational flowcharts disclosed in this document. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may store software code including commands for performing a part or the entirety of processes controlled by the processor(s) 202 or for performing the descriptions, functions, procedures, proposals, methods, and/or operational flowcharts disclosed in this document. Herein, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 may be interchangeably used with RF unit(s). In the present disclosure, the wireless device may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as PHY, MAC, RLC, PDCP, RRC, and SDAP). The one or more processors 102 and 202 may generate one or more Protocol Data Units (PDUs) and/or one or more Service Data Unit (SDUs) according to the descriptions, functions, procedures, proposals, methods, and/or operational flowcharts disclosed in this document. The one or more processors 102 and 202 may generate messages, control information, data, or information according to the descriptions, functions, procedures, proposals, methods, and/or operational flowcharts disclosed in this document. The one or more processors 102 and 202 may generate signals (e.g., baseband signals) including PDUs, SDUs, messages, control information, data, or information according to the descriptions, functions, procedures, proposals, methods, and/or operational flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operational flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. The descriptions, functions, procedures, proposals, methods, and/or operational flowcharts disclosed in this document may be implemented using firmware or software and the firmware or software may be configured to include the modules, procedures, or functions. Firmware or software configured to perform the descriptions, functions, procedures, proposals, methods, and/or operational flowcharts disclosed in this document may be included in the one or more processors 102 and 202 or stored in the one or more memories 104 and 204 so as to be driven by the one or more processors 102 and 202. The descriptions, functions, procedures, proposals, methods, and/or operational flowcharts disclosed in this document may be implemented using firmware or software in the form of code, commands, and/or a set of commands.

The one or more memories 104 and 204 may be connected to the one or more processors 102 and 202 and store various types of data, signals, messages, information, programs, code, instructions, and/or commands. The one or more memories 104 and 204 may be configured by Read-Only Memories (ROMs), Random Access Memories (RAMs), Electrically Erasable Programmable Read-Only Memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of this document, to one or more other devices. The one or more transceivers 106 and 206 may receive user data, control information, and/or radio signals/channels, mentioned in the descriptions, functions, procedures, proposals, methods, and/or operational flowcharts disclosed in this document, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208 and the one or more transceivers 106 and 206 may be configured to transmit and receive user data, control information, and/or radio signals/channels, mentioned in the descriptions, functions, procedures, proposals, methods, and/or operational flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 15 illustrates another example of a wireless device applied to the present disclosure. The wireless device may be implemented in various forms according to a use-case/service (refer to FIG. 13).

Referring to FIG. 15, wireless devices 100 and 200 may correspond to the wireless devices 100 and 200 of FIG. 14 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 14. For example, the transceiver(s) 114 may include the one or more transceivers 106 and 206 and/or the one or more antennas 108 and 208 of FIG. 14. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 13), the vehicles (100b-1 and 100b-2 of FIG. 13), the XR device (100c of FIG. 13), the hand-held device (100d of FIG. 13), the home appliance (100e of FIG. 13), the IoT device (100f of FIG. 13), a digital broadcast terminal, a hologram device, a public safety device, an MTC device, a medicine device, a fintech device (or a finance device), a security device, a climate/environment device, the AI server/device (400 of FIG. 13), the BSs (200 of FIG. 13), a network node, etc. The wireless device may be used in a mobile or fixed place according to a use-example/service.

In FIG. 15, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an Electronic Control Unit (ECU), a graphical processing unit, and a memory control processor. As another example, the memory 130 may be configured by a Random Access Memory (RAM), a Dynamic RAM (DRAM), a Read Only Memory (ROM)), a flash memory, a volatile memory, a non-volatile memory, and/or a combination thereof.

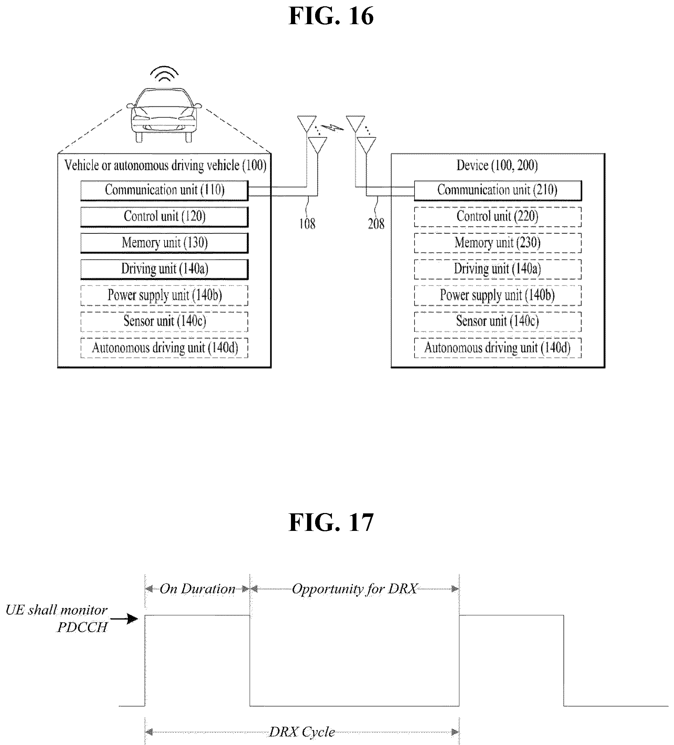

FIG. 16 illustrates a vehicle or an autonomous driving vehicle applied to the present disclosure. The vehicle or autonomous driving vehicle may be implemented by a mobile robot, a car, a train, a manned/unmanned Aerial Vehicle (AV), a ship, etc.

Referring to FIG. 16, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 15, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an Electronic Control Unit (ECU). The driving unit 140a may cause the vehicle or the autonomous driving vehicle 100 to drive on a road. The driving unit 140a may include an engine, a motor, a powertrain, a wheel, a brake, a steering device, etc. The power supply unit 140b may supply power to the vehicle or the autonomous driving vehicle 100 and include a wired/wireless charging circuit, a battery, etc. The sensor unit 140c may acquire a vehicle state, ambient environment information, user information, etc. The sensor unit 140c may include an Inertial Measurement Unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, etc. The autonomous driving unit 140d may implement technology for maintaining a lane on which a vehicle is driving, technology for automatically adjusting speed, such as adaptive cruise control, technology for autonomously driving along a determined path, technology for driving by automatically setting a path if a destination is set, and the like.

For example, the communication unit 110 may receive map data, traffic information data, etc. from an external server. The autonomous driving unit 140d may generate an autonomous driving path and a driving plan from the obtained data. The control unit 120 may control the driving unit 140a such that the vehicle or the autonomous driving vehicle 100 may move along the autonomous driving path according to the driving plan (e.g., speed/direction control). In the middle of autonomous driving, the communication unit 110 may aperiodically/periodically acquire recent traffic information data from the external server and acquire surrounding traffic information data from neighboring vehicles. In the middle of autonomous driving, the sensor unit 140c may obtain a vehicle state and/or surrounding environment information. The autonomous driving unit 140d may update the autonomous driving path and the driving plan based on the newly obtained data/information. The communication unit 110 may transfer information about a vehicle position, the autonomous driving path, and/or the driving plan to the external server. The external server may predict traffic information data using AI technology, etc., based on the information collected from vehicles or autonomous driving vehicles and provide the predicted traffic information data to the vehicles or the autonomous driving vehicles.

FIG. 17 is a diagram illustrating a DRX operation of a UE according to an embodiment of the present disclosure.

The UE may perform a DRX operation in the afore-described/proposed procedures and/or methods. A UE configured with DRX may reduce power consumption by receiving a DL signal discontinuously. DRX may be performed in an RRC_IDLE state, an RRC _INACTIVE state, and an RRC_CONNECTED state. The UE performs DRX to receive a paging signal discontinuously in the RRC_IDLE state and the RRC _INACTIVE state. DRX in the RRC_CONNECTED state (RRC_CONNECTED DRX) will be described below.

Referring to FIG. 17, a DRX cycle includes an On Duration and an Opportunity for DRX. The DRX cycle defines a time interval between periodic repetitions of the On Duration. The On Duration is a time period during which the UE monitors a PDCCH. When the UE is configured with DRX, the UE performs PDCCH monitoring during the On Duration. When the UE successfully detects a PDCCH during the PDCCH monitoring, the UE starts an inactivity timer and is kept awake. On the contrary, when the UE fails in detecting any PDCCH during the PDCCH monitoring, the UE transitions to a sleep state after the On Duration. Accordingly, when DRX is configured, PDCCH monitoring/reception may be performed discontinuously in the time domain in the afore-described/proposed procedures and/or methods. For example, when DRX is configured, PDCCH reception occasions (e.g., slots with PDCCH SSs) may be configured discontinuously according to a DRX configuration in the present disclosure. On the contrary, when DRX is not configured, PDCCH monitoring/reception may be performed continuously in the time domain. For example, when DRX is not configured, PDCCH reception occasions (e.g., slots with PDCCH SSs) may be configured continuously in the present disclosure. Irrespective of whether DRX is configured, PDCCH monitoring may be restricted during a time period configured as a measurement gap.

DRX configuration information is received by higher-layer signaling (e.g., RRC signaling), and DRX ON/OFF is controlled by a DRX command from the MAC layer. Once DRX is configured, the UE may perform PDCCH monitoring discontinuously in performing the afore-described/proposed procedures and/or methods.

The above-described embodiments correspond to combinations of elements and features of the present disclosure in prescribed forms. And, the respective elements or features may be considered as selective unless they are explicitly mentioned. Each of the elements or features can be implemented in a form failing to be combined with other elements or features. Moreover, it is able to implement an embodiment of the present disclosure by combining elements and/or features together in part. A sequence of operations explained for each embodiment of the present disclosure can be modified. Some configurations or features of one embodiment can be included in another embodiment or can be substituted for corresponding configurations or features of another embodiment. And, it is apparently understandable that an embodiment is configured by combining claims failing to have relation of explicit citation in the appended claims together or can be included as new claims by amendment after filing an application.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

The present disclosure is applicable to UEs, BSs, or other apparatuses in a wireless mobile communication system.

**Claims**

1. A method of transmitting a signal by a user equipment (UE) in a wireless communication system, the method comprising:

receiving a medium access control (MAC) control element (CE) related to an at least eight uplink antenna ports-based transmission;

receiving, through a physical downlink control channel (PDCCH), downlink control information (DCI) for uplink scheduling, including a transmission precoding matrix index (TPMI) field; and

transmitting an uplink signal based on the DCI,

wherein based on that the DCI is for the at least eight uplink antenna ports-based transmission, a precoding matrix set is determined through the MAC CE, and

wherein a precoding matrix for the uplink signal is determined from the precoding matrix set determined through the MAC CE, based on an index value in the TPMI field.

2. The method of claim 1, wherein the MAC CE includes a transmission rank indicator (TRI) field, and wherein the precoding matrix set is determined based on a TRI.

3. The method of claim 1, wherein the precoding matrix set is a codebook, and wherein one of a plurality of codebooks configured for the UE is determined by the MAC CE.

4. The method of claim 1, wherein the precoding matrix set determined through the MAC CE is a subset of precoding matrices included in one codebook.

5. The method of claim 4, wherein a plurality of subsets of the precoding matrices included in the one codebook are configured for the UE through higher layer signaling, and wherein one of the plurality of subsets is determined through the MAC CE.

6. The method of claim 1, wherein the MAC CE includes information about a codebook subsampling pattern for determining the precoding matrix set.

7. The method of claim 1, wherein the precoding matrix set determined through the MAC CE is used after a predetermined time offset from a hybrid automatic repeat request-acknowledgement (HARQ-ACK) for the MAC CE.

8. The method of claim 7, wherein a default precoding matrix set is used from the reception of the MAC CE until before application of the precoding matrix set.

9. A computer-readable recording medium recording a program for performing the method of claim 1.

10. A device for wireless communication, the device comprising:

a memory configured to store instructions; and
a processor configured to perform operations by executing the instructions,
wherein the operations of the processor include:

receiving a medium access control (MAC) control element (CE) related to an at least eight uplink antenna ports-based transmission;

receiving downlink control information (DCI) for uplink scheduling, including a transmission precoding matrix index (TPMI) field through a physical downlink control channel (PDCCH); and

transmitting an uplink signal based on the DCI,

wherein based on that the DCI is for the at least eight uplink antenna ports-based transmission, a precoding matrix set is determined through the MAC CE, and

wherein a precoding matrix for the uplink signal is determined from the precoding matrix set determined through the MAC CE, based on an index value in the TPMI field.

11. The device of claim 10, further comprising:

a transceiver,
wherein the device is a user equipment (UE) operating in a wireless communication system.

12. The device of claim 10, wherein the device is a processing device configured to control a user equipment (UE) operating in a wireless communication system.

13. A method of receiving a signal by a base station (BS) in a wireless communication system, the method comprising:

transmitting a medium access control (MAC) control element (CE) related to an at least eight uplink antenna ports-based reception;

transmitting downlink control information (DCI) including a transmission precoding matrix index (TPMI) field through a physical downlink control channel (PDCCH); and

receiving an uplink signal based on the DCI,

wherein based on that the DCI is for the at least eight uplink antenna ports-based reception, a precoding matrix set is determined through the MAC CE, and

wherein a precoding matrix for the uplink signal is determined from the precoding matrix set determined through the MAC CE, based on an index value in the TPMI field.

14. A computer-readable recording medium recording a program for performing the method of claim 13.

15. A base station (BS) for wireless communication, the BS comprising:

a memory configured to store instructions; and

a processor configured to perform operations by executing the instructions,

wherein the operations of the processor include:

transmitting a medium access control (MAC) control element (CE) related to an at least eight uplink antenna ports-based reception;

transmitting downlink control information (DCI) including a transmission precoding matrix index (TPMI) field through a physical downlink control channel (PDCCH); and

receiving an uplink signal based on the DCI,

wherein based on that the DCI is for the at least eight uplink antenna ports-based reception, a precoding matrix set is determined through the MAC CE, and

wherein a precoding matrix for the uplink signal is determined from the precoding matrix set determined through the MAC CE, based on an index value in the TPMI field.

EP 4 597 858 A1

# FIG. 1

Initial Cell Search — System Information Reception — Random Access Procedure — General DL/UL Tx/Rx
S108

| PSS/SSS & [DLRS] & PBCH | PDCCH/ PDSCH (BCCH) | PRACH | PDCCH/ PDSCH | PRACH | PDCCH/ PDSCH | PDCCH/ PDSCH | PUSCH/ PUCCH |

S101  S102  S103  S104  S105  S106  S107

• DL/UL ACK/NACK
• UE CQI/PMI/Rank Report using PUSCH and PUCCH

# FIG. 2

One Frame (10ms)

Half-Frame (5ms)    Half-Frame (5ms)

Subframe 0 (1ms)    Subframe 4 (1ms)    Subframe 5 (1ms)    Subframe 9 (1ms)

Subframe (1ms)

15KHz  | Slot (14 symbols) |
1ms

30KHz  | Slot 0 (14 symbols) | Slot 1 |
500us

60KHz  | Slot 0 (14 symbols) | Slot 1 | Slot 2 | Slot 3 |
250us

120KHz | Slot 0 (14 symbols) | Slot 1 | Slot 2 | Slot 3 | Slot 4 | Slot 5 | Slot 6 | Slot 7 |
125us

27

# FIG. 3

Resource grid

A carrier
(up to 3300 subcarriers, i. e., 275 RBs)

A BWP

1 RB = 12 subcarriers

1 RE

1 subcarrier

1 symbol

# FIG. 4

# FIG. 5

# FIG. 6

UL grant-to-PUSCH offset (K2)

PDCCH | | | | PUSCH | |

# FIG. 7

UE | BS

Configuration Information related to CSI (710)

RS(e.g., CSI-RS) (720)

Calculate CSI (730)

Report CSI (740)

# FIG. 8

TRP 1

Layer Group #1
for CW#1

TRP 2

Layer Group #1
for CW#2

UE 1

**(a)**

TRP 1

Layer Group #1
for CW#1

TRP 2

Layer Group #2
for CW#2

UE 1

**(b)**

# FIG. 9

Network                                      UE

UE Capability (A05)

UL Configuration for 8-Tx (A10)

MAC CE including 1st TRI (A15)

1st UL Grant DCI including 1st TPMI (A20)

UL Tx based on 1st TRI and 1st TPMI (A25)

2nd UL Grant DCI including 2nd TPMI (A30)

UL Tx based on 1st TRI and 2nd TPMI (A35)

# FIG. 10

Network Side

| TRP 2 | TRP1 | | UE |

M205
UE Capability

M210
Configuration Information

M215
DCI

M220-1
Data 1

M220-2
Data 2

# FIG. 11

Receive MAC CE related
(at least) 8-TX transmission — B05

Receive UL scheduling DCI — B10

Transmit UL signal — B15

# FIG. 12

Transmit MAC CE related
(at least) 8-TX transmission — C05

Transmit UL scheduling DCI — C10

Receive UL signal — C15

# FIG. 13

# FIG. 14

# FIG. 15

Device(100, 200)

# FIG. 16

# FIG. 17

## INTERNATIONAL SEARCH REPORT

International application No.

**PCT/KR2023/014956**

### A. CLASSIFICATION OF SUBJECT MATTER

**H04B 7/0456**(2017.01)i; **H04B 7/0404**(2017.01)i; **H04B 7/06**(2006.01)i; **H04W 72/23**(2023.01)i; **H04W 72/04**(2009.01)i; **H04W 72/12**(2009.01)i

According to International Patent Classification (IPC) or to both national classification and IPC

### B. FIELDS SEARCHED

Minimum documentation searched (classification system followed by classification symbols)

H04B 7/0456(2017.01); H04B 7/06(2006.01); H04L 5/00(2006.01); H04W 52/14(2009.01); H04W 72/12(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 8-Tx 안테나 포트(8-transmission antenna port), MAC CE(medium access control control element), TPMI(transmission precoding matrix index), 프리코딩 행렬(precoding matrix), 세트(set), 인덱스(index)

### C. DOCUMENTS CONSIDERED TO BE RELEVANT

| Category* | Citation of document, with indication, where appropriate, of the relevant passages | Relevant to claim No. |
|---|---|---|
| Y | INTERDIGITAL, INC. SRI/TPMI Enhancement for 8TX UE. R1-2205822, 3GPP TSG RAN WG1 #110. Toulouse, France. 12 August 2022.<br>See section 2. | 1-15 |
| Y | US 2022-0239351 A1 (QUALCOMM INCORPORATED) 28 July 2022 (2022-07-28)<br>See paragraphs [0053], [0098], [0132] and [0184]. | 1-15 |
| Y | WO 2022-197163 A1 (SAMSUNG ELECTRONICS CO., LTD.) 22 September 2022 (2022-09-22)<br>See pages 95 and 101. | 7-8 |
| A | SONY. Discussion on enhancement for 8Tx UL transmission. R1-2206112, 3GPP TSG RAN WG1 #110. Toulouse, France. 12 August 2022.<br>See sections 2.1-2.3. | 1-15 |
| A | US 2020-0322026 A1 (QUALCOMM INCORPORATED) 08 October 2020 (2020-10-08)<br>See paragraphs [0071]-[0131]; and figures 4-12. | 1-15 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **09 January 2024** | **09 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/014956**

| Patent document cited in search report | | | Publication date (day/month/year) | Patent family member(s) | | | Publication date (day/month/year) |
|---|---|---|---|---|---|---|---|
| US | 2022-0239351 | A1 | 28 July 2022 | CN | 113924744 | A | 11 January 2022 |
| | | | | EP | 3977660 | A1 | 06 April 2022 |
| | | | | WO | 2020-237628 | A1 | 03 December 2020 |
| | | | | WO | 2020-238632 | A1 | 03 December 2020 |
| WO | 2022-197163 | A1 | 22 September 2022 | KR | 10-2022-0131126 | A | 27 September 2022 |
| | | | | US | 2022-0312337 | A1 | 29 September 2022 |
| US | 2020-0322026 | A1 | 08 October 2020 | US | 11159221 | B2 | 26 October 2021 |
| | | | | WO | 2020-205439 | A1 | 08 October 2020 |

Form PCT/ISA/210 (patent family annex) (July 2022)